(19) Europäisches Patentamt
European Patent Office
Office européen des brevets

(11) EP 2 590 349 B1

(12) # EUROPEAN PATENT SPECIFICATION

(45) Date of publication and mention of the grant of the patent:
**15.10.2014 Bulletin 2014/42**

(51) Int Cl.:
***H04L 5/00*** *(2006.01)* ***H04W 72/04*** *(2009.01)*

(21) Application number: **11187721.3**

(22) Date of filing: **03.11.2011**

(54) **A method for scheduling a scalable video coding stream in a wireless mobile network**

Verfahren zur Planung eines skalierbaren Videokodierungsstroms in einem drahtlosen mobilen Netzwerk

Procédé de planification d'un flux de codage vidéo extensible dans un réseau mobile sans fil

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.05.2013 Bulletin 2013/19**

(73) Proprietor: **NTT DoCoMo, Inc.**
**Chiyoda-ku**
**Tokyo 100-6150 (JP)**

(72) Inventors:
- **Omiyi, Peter**
  **London NW4 2 AN (GB)**
- **Martini, Maria M.**
  **London (GB)**
- **Bharucha, Zubin**
  **Edinburgh, EH9 3DJ (GB)**
- **Auer, Gunther**
  **80339 Munich (DE)**

(74) Representative: **Zimmermann, Tankred Klaus**
**Schoppe, Zimmermann**
**Stöckeler & Zinkler & Partner**
**Patentanwälte**
**Postfach 246**
**82043 Pullach bei München (DE)**

(56) References cited:
- **BASARAN C ET AL: "Bandwidth Consumption Control and Service Differentiation for Video Streaming", COMPUTER COMMUNICATIONS AND NETWORKS, 2008. ICCCN '08. PROCEEDINGS OF 17TH INTERNATIONAL CONFERENCE ON, IEEE, PISCATAWAY, NJ, USA, 3 August 2008 (2008-08-03), pages 1-6, XP031825143, ISBN: 978-1-4244-2389-7**
- **CHIH-WEI HUANG ET AL: "Layered Video Resource Allocation in Mobile WiMAX Using Opportunistic Multicasting", WIRELESS COMMUNICATIONS AND NETWORKING CONFERENCE, 2009. WCNC 2009. IEEE, IEEE, PISCATAWAY, NJ, USA, 5 April 2009 (2009-04-05), pages 1-6, XP031454273, ISBN: 978-1-4244-2947-9**
- **JUNU KIM ET AL: "Layered resource allocation for video broadcasts over wireless networks", IEEE TRANSACTIONS ON CONSUMER ELECTRONICS, IEEE SERVICE CENTER, NEW YORK, NY, US, vol. 54, no. 4, 1 November 2008 (2008-11-01), pages 1609-1616, XP011239721, ISSN: 0098-3063, DOI: 10.1109/TCE.2008.4711209**
- **JEN-WEN DING ET AL: "Adaptive bandwidth allocation for layered video streams over wireless broadcast channels", COMMUNICATIONS AND NETWORKING IN CHINA, 2009. CHINACOM 2009. FOURTH INTERNATIONAL CONFERENCE ON, IEEE, PISCATAWAY, NJ, USA, 26 August 2009 (2009-08-26), pages 1-5, XP031570623, ISBN: 978-1-4244-4337-6**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 590 349 B1

- MIKKO MYLLYNIEMI ET AL: "Fuzzy Logic-based Cross-layer Controller for Wireless Video Transmission", COMPUTERS AND COMMUNICATIONS, 2007. ISCC 2007. IEEE SYMPOSIUM ON, IEEE, PI, 1 July 2007 (2007-07-01), pages MW-21, XP031159859, ISBN: 978-1-4244-1520-5
- JUN XU ET AL: "Quasi-Optimal Channel Assignment for Real-Time Video in OFDM Wireless Systems", IEEE TRANSACTIONS ON WIRELESS COMMUNICATIONS, IEEE SERVICE CENTER, PISCATAWAY, NJ, US, vol. 7, no. 4, 1 April 2008 (2008-04-01), pages 1417-1427, XP011207548, ISSN: 1536-1276
- AMMAR M H ET AL: "Optimal Quality Adaptation for Scalable Encoded Video", IEEE JOURNAL ON SELECTED AREAS IN COMMUNICATIONS, IEEE SERVICE CENTER, PISCATAWAY, US, vol. 23, no. 2, 1 February 2005 (2005-02-01), pages 344-356, XP011126487, ISSN: 0733-8716, DOI: 10.1109/JSAC.2004.839390
- LOTFALLAH ET AL: "Adaptive bitstream switching of scalable video", SIGNAL PROCESSING. IMAGE COMMUNICATION, ELSEVIER SCIENCE PUBLISHERS, AMSTERDAM, NL, vol. 22, no. 10, 1 November 2007 (2007-11-01), pages 809-832, XP022328281, ISSN: 0923-5965, DOI: 10.1016/J.IMAGE. 2007.06.002

## Description

The invention relates to the field of wireless mobile networks, more specially to a method for scheduling a scalable video coding (SVC) stream to one or more users in a wireless mobile network. Embodiments address the problem of scheduling video streams to multiple users on a wireless mobile network, where scalable video coding (SVC) is employed, and provide a fuzzy logic controller based content/channel aware scheduler for scalable video wireless transmission.

Supporting multimedia applications and services over wireless networks is challenging due to constraints and heterogeneities such as limited bandwidth, limited battery power, random time-varying channel conditions, and quality of service (QoS) requirements.

Channel-unaware schedulers make no use of channel state conditions. They basically focus on fulfilling delay and throughput constraints and include Round-Robin, weighted fair queuing (WFQ) and priority based algorithms. Such algorithms assume perfect channel condition, no loss and unlimited power source. However, due to the nature of the wireless medium and the user mobility, these assumptions are not completely valid. The BS (base station) downlink scheduler may use channel information, e.g. CSI (Channel State Information), including the Carrier to Interference and Noise Ratio (CINR), which is reported back from the mobile receiver. Most of the channel-aware algorithms assume that channel conditions do not change within the frame period. It is also assumed that the channel information is known at both the transmitter and the receiver. In general, schedulers favor the users with better channel quality to exploit the multiuser diversity and channel fading. In order to meet fairness requirements, however, the scheduler also needs to consider other users' requirements and needs to introduce some compensation mechanisms.

In non-content aware strategies, see e.g. P. Falconio and P. Dini, "Design and performance evaluation of packet scheduler algorithms for video traffic in the high speed downlink packet access," in Proc. IEEE PIMRC, Barcelona, Spain, Sep. 2004, pp. 2202-2206, D. Tse and P. Viswanath, Fundamentals of Wireless Communication, Cambridge-University-Press, 2005, and H. Wang, L. Kondi, A. Luthra, and S. Ci, 4G Wireless Video Communications, John-Wiley-and-Sons, 2009, the quality of service of the received video is measured in generic terms of packet delay, packet loss rate or data rate. In general, these methods exploit the variability of the wireless channel over time and across users, allocating a majority of the available resources to users with good channel quality who can support higher data rates, while maintaining fairness across multiple users. In this context, these strategies attempt to maximize a utility function, which is defined as either a function of each users current average throughput, or of each users queue length or delay of the head-of-line packet.

Video quality, however, is not a simple function of the data rate, delay or data loss but it is affected differently by the impact of losses and errors in different segments of the video stream (see H. Wang, L. Kondi, A. Luthra, and S. Ci, 4G Wireless Video Communications, John-Wiley-and-Sons, 2009). This is highlighted in a SVC bitstream, which includes one base layer and multiple enhancement layers. As long as the base layer is received, the receiver can decode the video stream. As more enhancement layers are received, the decoded video quality is improved. In multi-user video transmission, this introduces a type of multi-user content diversity that can be exploited by content-aware scheduling policies in optimizing the utilization of the network resource. Examples of content-aware methods are found in G. Liebl, H. Jenkac, T. Stockhammer, and C. Buchner, "Radio link buffer management and scheduling for wireless video streaming," Telecommunication Systems, Springer Science & Business Media B. V., vol. 30/1-3, pp. 255-277, Nov. 2009, M. van der Schaar, Y. Andreopoulos, and Z. Hu, "Optimized scalable video streaming over IEEE 802.11a/e HCCA wireless networks under delay constraints," IEEE Trans. on Mobile Computing, vol. 5, no. 6, pp. 755-768, 2006, L. Choi, W. Kellerer, and E. Steinbach, "On cross-layer design for streaming video delivery in multiuser wireless environments," Eurasip Journal on Wireless Communication and Networking, vol. 2006, pp. 1-10, 2006, P. V. Pahalawatta, R. Berry, T. N. Pappas, and A. K. Katsaggelos, "Content-aware resource allocation and packet scheduling for video transmission over wireless networks," IEEE Journal on Sel. Areas on Commun., vol. 25, no. 4, pp. 749-759, 2007, and J. Huang, Z. Li, M. Chiang, and A. K. Katsaggelos, "Joint source adaptation and resource allocation for multi-user wireless video streaming," IEEE Trans. on Circuits and Systems for Video Technology, vol. 18, no. 5, pp. 582-595, 2008.

M. van der Schaar, Y. Andreopoulos, and Z. Hu, "Optimized scalable video streaming over IEEE 802.11a/e HCCA wireless networks under delay constraints," IEEE Trans. on Mobile Computing, vol. 5, no. 6, pp. 755-768, 2006, introduce the subflow concept in which a video flow (bitstream) is divided into several subflows based on their delay constraints as well as based on the relative priority in terms of the overall distortion of the decoded video. This is combined with a prioritized scheduling function of the 802.11e WLAN MAC. One drawback of this approach is its limitation to the 802.11e MAC which allows a limited number of priority classes. This results in limited subflow differentiation of the video stream and thus limited gains from the multi-user content diversity. Furthermore, multi-user channel diversity is not exploited.

P. V. Pahalawatta, R. Berry, T. N. Pappas, and A. K. Katsaggelos, "Content-aware resource allocation and packet scheduling for video transmission over wireless networks," IEEE Journal on Sel. Areas on Commun., vol. 25, no. 4, pp. 749-759, 2007 propose content-aware packet reordering per user and multi-user content-aware priority based scheduling. User priorities are determined in each time-slot based on maximizing a multi-dimensional utility function, which aims to minimize the distortion of users and maximize the (error-free) per-user data rate. Content-based long-term fairness is also included in the utility function. However, the optimum multi-user transmission profile is intractable and an approximate sub-optimal solution is used by the scheduler. Furthermore, the multi-dimensional optimization at every time-slot is inherent so that the computational complexity increases with the number of users and available channels.

X. Ji, J. Huang, M. Chiang, G. Lafruit, and F. Catthoor, "Scheduling and resource allocation for SVC streaming over OFDM downlink systems," IEEE Trans. on Circuits and Systems, vol. 19, no. 10, pp. 1549-1555, 2009 propose a gradient-based scheduling and resource allocation algorithm, which prioritizes the transmissions of different users as a function of content, deadline requirements and past allocation history. Simulation results show that the proposed algorithm outperforms content-blind and deadline-blind algorithms with a gain of as much as 6 dB in terms of average PSNR in a congested network. This scheme does not explicitly consider channel conditions in its allocation process. In a wireless environment, this will lead to poor overall performance, with a few users with very poor channel conditions, using almost all the available channel resources to satisfy their video quality requirements. In order to avoid this, it is proposed to deny access to users with channel quality less than a predetermined threshold, which limits wireless coverage.

A common approach shared by the above schemes is that they rely on precise numeric or 'crisp' values of quality or distortion to determine scheduling priorities. However, video quality is subjective, and while it is relatively straightforward to distinguish between the importance of different segments of the video stream, based on their relative impact on video quality, it is difficult to quantify these differences. None of the above proposals consider the inherent conflict between content-aware scheduling and channel-aware scheduling, and the possibility of enhancing wireless coverage by managing this trade-off.

There are a number of publications dealing with the problem of controlling the streaming of video data in a wireless system using fuzzy controllers. For example, the publication of M. Flurry et al. "Resource-Aware Fuzzy Logic Control of Video Streaming over IP and Wireless Networks" describes the basic possibility of applying fuzzy control logic to the control of video streaming in a wireless network. Using a fuzzy logic controller for SVC data is described by X. Wang "Using Fuzzy Logic Controller to Implement Scalable Quality Adaptation for Stored Video in DiffServ Networks". While the possibility of controlling video streaming using a fuzzy logic control is described, the input variables to the fuzzy logic do not consider video streaming specifics, especially not any specifics of a scalable video coding (SVC) stream.

Thus, in prior art approaches, traditionally, binary decisions have been used for resource allocation. For example, either a user should be served with a particular rate, or it should be dropped. Thus, there was always the question as to whether to serve more users with lower quality or less users with higher quality. Due to the limited wireless resources, balancing cell-edge capacity with overall system capacity has always been an issue in prior art approaches, however, conventional systems do not operate at full load on purpose (load margins) in order to allow for handover from other cells, unexpected traffic rise and the like. This leads to an inefficient resource usage.

The just-mentioned limitations of prior art approaches will be described in further detail with regard to Fig. 1 showing known approaches for serving users on the basis of an approach being channel aware only or being content aware only.

In Fig. 1(a) a schematic representation of one cell of a wireless network is shown having a base station BS serving users within the cell 100. The cell comprises an edge region 102 and, in the example shown in Fig. 1(a), two users $UE_1$ and $UE_2$ are served by the base station BS. The user $UE_1$ is within a central region 104 of the cell 100 whereas user $UE_2$ is at the cell edge 102. When applying an approach being channel aware only, users with good channel conditions are served while users with bad channel conditions are ignored. In the case shown in Fig. 1(a), users within the central region 104 of the cell 100, in general, have good channel conditions, more specifically channel conditions which are better than the channel conditions of the user $UE_2$ at the cell edge 102 so that user $UE_1$, when applying the channel aware only approach, will be served while user $UE_2$ will be ignored.

Fig. 1(b) shows the cell of Fig. 1(a) with the users $UE_1$ and $UE_2$ and depicts the situation when applying a content aware only approach. When applying such an approach, the system will try to serve all demands, however, users, like user $UE_2$, at the cell edge 102 having bad channel conditions will be assigned more resources so that, finally, the system gets starved of resources which does not allow for serving the user $UE_1$ at the central region of the cell 100. Thus, prior art approaches do not allow for the provision of good video delivery to the entire network.

Basran C et al: "Bandwidth Consumption Control and Service Differentiation for Video Streaming", Computer Communications and Networks, 2008. ICCCN '08, proceedings of 17th International Conference on, IEEE, Piscataway, NJ, USA, 3. August 2008, pages 1 to 6, describe using fuzzy logic control to bound the bandwidth consumption of multimedia streams. Also the video quality for streams with different levels of importance is differentiated.

Chih-Wei Huang et al: "Layered Video Resource Allocation in Mobile WiMAX Using Opportunistic Multicasting", Wireless Communications and Networking Conference, 2009. WCNC 2009. IEEE, IEEE Piscataway NJ, USA, 5. April 2009, pages 1 to 6, describe a resource allocation algorithm that provides enhanced QoS and efficiency for layered video multicast over mobile WiMAX. To accommodate various bandwidth requirements and adaptive perceptual quality to different users, video streams are coded into base and enhancement layers using scalable video coding technology.

The minimum effective throughput across all users is maximized for mandatory (base) layer delivery through adapting modulation and coding schemes, and optional (enhancement) layers are allocated to maximize total utility.

Jun Xu et al: "Quasi-Optimal Channel Assignment for Real-Time Video in OFDM Wireless Systems", IEEE Transactions on Wireless Communications, IEEE service center, Piscataway, NJ, US, vol. 7, no. 4, 1 April 2008 pages 1417-1427, describes real-time video transmission with quality of service (QoS) assurance over orthogonal frequency division multiplexing (OFDM) wireless systems. Three quasi-optimal subcarrier allocation schemes, namely regular, delay tolerant and adaptive, are described. Effective throughput per subcarrier employing adaptive forward error correction (FEC) coding in a Rayleigh fading channel is evaluated, and a capacity matrix that governs all active users and all assignable subcarriers is formulated.

It is an object of the invention to provide an improved approach for scheduling a scalable video coding (SVC) stream to one or more users in a wireless mobile network using fuzzy logic.

This object is achieved by a method of claim 1, a computer program product of claim 13, a wireless mobile network of claim 14, and a node for a wireless mobile network of claim 15.

Embodiments of the invention provide a method for scheduling a scalable video coding (SVC) stream to one or more users in a wireless mobile network, the method comprising:

(a) determining a physical resource block (PRB)/user pair having a highest utility among the available PRBs and users; and

(b) allocating the PRB of the pair to the user of the pair,

wherein the utility is determined using fuzzy logic inference, the input of the fuzzy inference comprising a significance of a layer of the SVC stream to be scheduled to the user and a transmission rate for the user over the PRB.

In accordance with embodiments, each PRB comprises a corresponding user dependent and time varying channel quality between a node of the wireless mobile network and the user that is represented by the maximum possible transmission rate for the user over the PRB, and the SVC stream comprises a plurality of layers, an antecedent layer having a higher or lower layer index than any of its dependent layers, the antecedent layer being sent to the user before any of its dependent layers, and the significance indicating the importance of a SVC layer to be sent to the user based on the layer index of the SVC layer.

The fuzzy rules for the fuzzy logic inference may comprise:

(1) if significance is high then utility is high,
(2) if significance is low then utility is low,
(3) if rate is high then utility is high,
(4) if rate is low then utility is low.

In accordance with embodiments, the fuzzy logic inference is a zero-order Sugeno fuzzy inference on the basis of which the utility is expressed as follows:

$$u_i(t,k,\varphi) \equiv 0.5[\mu_V(v_i(t,k,\varphi), V_{\mathrm{HIGH}})U_V(V_{\mathrm{HIGH}}) + \mu_R(r_i(t,k,\varphi), R_{\mathrm{HIGH}})U_R(R_{\mathrm{HIGH}})]$$

| | |
|---|---|
| $u_i$ | = utility, |
| $\mu_V$ | = degree of membership or membership function of significance with a crisp value, |
| $\mu_R$ | = degree of membership or membership function of rate with a crisp value, |
| $v_i(t, k, \varphi)$ | = significance of a SVC stream layer having the highest significance to be sent to the user in a time slot *t* using a subcarrier *k* of the PRB$\varphi$, |
| $r_i(t, k\ \varphi)$ | = attainable bit rate of the user on the PRB$\varphi$ in the time slot t using subcarrier *k* of PRB$\varphi$, |
| $V_{\mathrm{HIGH}}$ | = high significance set, |
| $R_{\mathrm{HIGH}}$ | = high rate set, |
| $U_V(V_{\mathrm{HIGH}})$ | = a, |
| $U_R(R_{\mathrm{HIGH}})$ | = 1 - $\alpha$, and |
| $\alpha$ | = utility coefficient determining a trade-off between content and channel awareness upon scheduling the SVC stream. |

In accordance with embodiments the wireless mobile network comprises one or more nodes, a node serving a plurality of users, wherein a group of pictures (GOP) of the SVC stream is transmitted during a plurality of time slots, each time slot comprising a plurality of PRBs, each PRB comprising a plurality of subcarriers, and wherein the method repeats steps (a) and (b) for each time slot and for each subcarrier in a time slot. SVC stream data to be sent to the respective users may be buffered, and the method may comprise:

(i) determining for a current time slot whether there are any active users served by the node for which SVC stream data is buffered,

(ii) if there are active users then determining whether there are any unallocated PRBs available in the current time slot,

(iii) if there are no unallocated PRBs available then going to the next time slot,

(iv) if there are unallocated PRBs available then determining the significance of a SVC stream layer represented by the buffered SVC stream data, and determining, for each active user, the quality of all unallocated PRBs in the current time slot,

(v) for each user determining the utility of all unallocated PRBs as a fuzzy logic function of the layer significance and the PRB quality, and

(vi) selecting the user-PRB pair that maximizes the utility.

Further, the method may comprise:

(vii) removing the selected PRB from a list of unallocated PRBs in the current time slot,

(viii) updating a buffer of the selected user, and

(ix) repeating steps (i) to (viii).

In step (iii) the next time slot may become the current time slot and the method returns to step (ii).

In accordance with embodiments the significance of a layer $\ell$ of the SVC stream is determined as follows:

$$v(l) = 1 - \frac{\ell}{N_L}$$

$N_L$ = total number of layers in a single GOP of the user.

In accordance with embodiments the transmission rate for the user *i* over the PRB$\varphi$ at a time *t* is determined as follows:

$$r_i(t,\varphi) = G_{mux} B \log_2(1 + \varepsilon_i(\varphi)\gamma_i(t,\varphi))$$

$\gamma_i(t, \varphi)$ = estimated received signal-to-noise ratio (SNR),
$G_{mux}$ = MIMO spatial multiplexing gain, and
$\varepsilon(\varphi)$ = estimation error margin for $\gamma_i(t, \varphi)$.

In accordance with embodiments the performance of the scheduling for the user is evaluated on the basis of an average quality and a normalized significance throughput. For a user *i* at a distance *d* from a base station, the average quality and the normalized significance throughput may be determined as follows:

$$Q(d) = \sum_{l=0}^{N_L(i)-1} \rho_l (q_l - q_{l-1}) \frac{S_{i,l}(d)}{\mathrm{E}\{N_{\mathrm{bits}}(l,i)\}},$$

$$S_{\mathrm{sig}}(d) = \frac{1}{N_L(i)} \sum_{l=0}^{N_L(i)-1} \rho_l \frac{S_{i,l}(d)}{\mathrm{E}\{N_{\mathrm{bits}}(l,i)\}},$$

$N_L$ = total number of layers in a GOP of the user *i*,
$\rho_l$ = zero in case any of the antecedent layers of layer *l* is missing, and one otherwise,
$S_{i,l}(d)$ = number of bits of layer *l* of user *i* transmitted before the delay deadline,
$N_{bits}(l, i)$ = number of bits of layer *l* of user *i*,
$E\{N_{bits}(l, i)\}$ = statistical mean of $N_{bits}(l, i)$,
$q_l$ = average PSNR if all *l+1* layers have been received without error, and zero for *l* < *1*,

wherein for a user among the *p*% of users closest to the base station, the average quality and the normalized significance throughput are determined as follows:

$$Q_P(p) = \int_0^{d_{sec}(p)} f_d(d,p) Q(d) \mathrm{d}d$$

$$Z_{\mathrm{sig}}(p) = \int_0^{d_{sec}(p)} f_d(d,p) S_{\mathrm{sig}}(d) \mathrm{d}d,$$

$d_{sec}(p)$ = radius of the sector centered at the node occupied by *p*% of the users, and
$f_d(p)$ = pdf of the distance d of a single user within the sector defined by $d_{sec}(p)$.

Embodiments of the invention provide a wireless mobile network, comprising a plurality of base stations, and a plurality of mobile users, wherein a base station serves one or more mobile users, wherein one or more of the base stations comprises a scheduler for scheduling a SVC stream to one or more users served by the base station in accordance with the inventive method.

Embodiments of the invention provide a node for a wireless mobile network, the node comprising a scheduler for scheduling a SVC stream to one or more users served by the node in accordance with a inventive method.

Thus, the present invention provides an approach for a good video delivery to an entire network and not just to the cell-center users or to the cell-edge users. In accordance with the inventive approach, the fuzzy logic theory is used to combine qualitative (linguistic/semantic) values of video content and quantitative values of channel quality to obtain a numeric utility value which allows for improving the video delivery over the entire network by providing a balance between content and channel awareness which may be adjusted based on system requirements, so that a content and channel aware trade-off is exploited. Further, the downlink wireless coverage for scalable video is enhanced and outages are minimized. The trade-off enhances the overall user experience throughout the coverage area. The number of supported users can be enhanced by as much as 40%, for playback without pauses. Further, an 80% enhancement is possible if short and imperceptible pauses are tolerated.

Embodiments of the invention provide a new approach for scheduling video streams to multiple users on a wireless mobile network, more specifically an approach for scheduling SVC streams to users on a wireless mobile network. In accordance with the inventive approach scheduling is effected on the basis of the so-called "utility" which, in accordance with embodiments of the invention is determined on the basis of a fuzzy logic inference that operates on the basis of the significance of a layer to be sent to the user and on the basis of the possible transmission rate for a channel between the user and a node or base station. In accordance with embodiments, a PRB-user pair is determined which has the highest user utility among all available PRBs, and the respective PRB of the pair is allocated to the user for effecting the transmission of the SVC data to the user.

In accordance with embodiments of the invention, a multi-user content/channel-aware based scheduling algorithm is taught, where user channel access priorities are selected based on a Sugeno Fuzzy Logic inference method. The advantage of the fuzzy logic system approach is that it incorporates both numerical and linguistic (qualitative) variables. It has the ability to simultaneously consider multiple criteria and to model human experience using a compact linguistic rule base. In the context of this work, fuzzy-logic theory allows content-importance to be represented as a linguistic variable and combined with numeric values of channel quality to determine scheduling priority. The fuzzy inference method is used to define dynamic utilities for each user, on a per-channel basis, as a polynomial function of the per-user quality estimate of the channel and the content-dependent importance of the next video data to be sent to the user. Specifically, the polynomial function determines the trade-off between content-awareness for enhanced video quality and channel-awareness for higher channel throughput.

The inventive approach avoids the computational complexity associated with multi-dimensional optimization over short time-scales, enabling dynamic optimization and scalability of the scheduler. It does not rely on precise numerical values of quality or distortion to determine scheduling priorities. However, video quality is subjective, and while it is relatively straightforward to distinguish between the importance of different segments of the video stream, based on their relative impact on video quality, it is difficult to quantify these differences. Thus, the inventive approach manages the inherent conflict between content-aware scheduling and channel-aware scheduling, and enhances wireless coverage by managing a trade-off therebetween.

Embodiments of the invention will be described with reference to the accompanying drawings, in which:

- Fig. 1 showing known approaches for serving users, Fig. 1(a) being a schematic representation of one cell operating on the basis of a channel aware only approach, and Fig. 1(b) being a schematic representation of one cell operating on the basis of a content aware only approach;
- Fig. 2 shows a GOP structure of SVC coded video stream;
- Fig. 3 is a schematic representation illustrating an embodiment of the inventive scheduler implementing the allocation process;
- Fig. 4 is a flow diagram depicting the scheduling method of the scheduler of Fig. 3;
- Fig. 5 shows a block diagram illustrating the inventive process for determining the utility (PRB utility) of all available PRBs in further detail;
- Fig. 6 shows an example of the inventive allocation process, Fig. 6(a) showing the allocation process for a first time-slot, and Fig. 6(b) showing the allocation process for a second time-slot;
- Fig. 7 shows the time/frequency distribution of the PRBs over one allocation period;
- Fig. 8 shows a table of the symbols used in this specification;
- Fig. 9 shows a plot of PSNR versus number of users for different classes of users and for $\alpha = 0$;
- Fig. 10 shows the normalized significance throughput versus number of users for dif ferent classes of users and $\alpha = 0$;
- Fig. 11 shows the normalized significance throughput versus number of users for different classes of users and $\alpha = 0.25$;
- Fig. 12 shows the normalized significance throughput versus number of users for different classes of users and $\alpha = 0.5$;
- Fig. 13 shows the normalized significance throughput versus number of users for different maximum delay constraints, 100% of users and $\alpha = 0$;
- Fig. 14 shows the normalized significance throughput versus number of users for different maximum delay constraints, 20% of users and $\alpha = 0.25$;
- Fig. 15 shows the normalized significance throughput versus number of users for different maximum delay constraints, 100% of users and $\alpha = 0.25$;
- Fig. 16 is a graph depicting the throughput for different numbers of cell-edge users and cell-center users for different utility coefficients $\alpha$; and
- Fig. 17 is the graph depicting the throughput for different numbers of cell-edge users and cell-center users for different utility coefficients $\alpha$ where pauses are allowed.

Embodiments of the invention will be described for a cellular downlink with an OFDMA air-interface. A single 120° sector of a tri-sectored hexagonal cellular downlink orthogonal frequency division multiple access (OFDMA) network will be considered, where each cell (see .g. Fig. 1) is served by a base station (BS) with three co-located directional antennas, each serving its respective sector. The tagged sector is serving *N* active wireless users, uniformly distributed across its area. The system bandwidth for each allocation duration is divided into *M* physical resource blocks (PRBs), wherein a PRB is a multi-dimensional resource unit spanning a fixed number of OFDMA subcarriers with bandwidth *B* and symbol durations.

All the sectors of the same BS can use the same PRBs simultaneously. Adjacent sectors from neighboring cells form a cluster. Interference from neighboring clusters is substantially mitigated by the sectorized architecture and the propagation path-loss and fading. A simple inter-cell coordination algorithm is assumed that avoids interference between sectors of the same cluster for all users, by ensuring that neighboring sectors of the same cluster never use the same PRBs simultaneously. By ensuring zero intercell interference (ICI) for all users, the number of PRBs required by each user is minimized, thus making available more PRBs for other users in the sector and in the cluster.

The number $m \leq M$ of PRBs allocated to a sector is a function of the mean expected traffic load (in bits/s) requirement of the sector relative to the other sectors in the same cluster. Let $L_{cluster}$ and $L_{sector}$ denote the total expected load of all sectors in the cluster and the load of the tagged sector, respectively, and let $m \approx L_{sector}/L_{cluster}$. The base station can allocate $m$ PRBs to a set of $N$ users at each allocation instance. At each allocation instance multiple PRBs can be assigned to a single user, each PRB however can be assigned to at most one user.

It is assumed that the channel conditions vary across different PRBs and for different users. The channel conditions vary with time, frequency (e.g. frequency selective multipath fading) and user location. Therefore, each PRB has a corresponding user-dependent and time-varying channel quality that is represented by the maximum possible transmission rate for that user over that PRB. Let $r_i(t,\varphi)$ denote the maximum possible transmission rate (bits/s) for user $i$ over PRB$\varphi$ at time $t$. Then,

$$r_i(t,\varphi) = G_{\text{mux}} B \log_2(1+\varepsilon_i(\varphi)\gamma_i(t,\varphi)) \quad (1)$$

where $y_i(t, \varphi)$ is the estimated received signal-to-noise ratio (SNR) after diversity combining (including MIMO antenna diversity and shadow fading), $G_{\text{mux}}$ is a MIMO spatial multiplexing gain and $\varepsilon_i(\varphi)$ is the estimation error margin for $\gamma_i(t, \varphi)$. It is assumed that the channel quality feedback from the user to the BS, comprising of $\gamma_i(t, \varphi)$ and $\varepsilon_i(\varphi)$, is provided to the scheduler within the channel's coherence time. Taking the bounds of the channel estimation error into account, minimizes the risk of errors during transmission.

## Scalable Video Coding

In the following the scalable video coding (SVC) scheme will be described. A SVC stream has a base layer and several enhancement layers. As long as the base layer is received, the receiver can decode the video stream. As more enhancement layers are received, the decoded video quality is improved. The scalability of SVC includes temporal scalability, spatial scalability, and quality scalability. Temporal scalability refers to representing the same video in different frame rates. The temporal scalable bit-stream is generated using hierarchical prediction structures as illustrated in Fig. 2 which shows a GOP (group-of-pictures) structure of SVC coded video stream. Spatial scalability refers to representing the video in different spatial resolutions or sizes. Normally, the picture of a spatial layer is based on the prediction from both lower temporal layers and spatial layers. Quality (or SNR) scalability refers to representing the same video stream in different SNR or quality levels.

The SVC video stream is composed of units, each of which is referred to as a group-of pictures (GOP). In the context of this specification, a GOP starts with the first frame following a key picture and ends with the next key picture. There are two types of key pictures; the intracoded (I) frame and the predicted (P) frame. Between successive key pictures there may be one or more bidirectionally predicted (B) frames comprising the GOP. The number of B frames between key pictures is given by $2^{(n_{TL}-1)}-1$, where $n_{TL}$ is a positive non-zero integer and denotes the number of temporal levels for temporal scalability.

The GOP comprises of multiple layers. Each layer is defined by its temporal, quality and spatial level, and comprises all the bits in the GOP with the same temporal, quality and spatial level. Every layer is dependent on other layers, except the base layer of an I frame. In this specification a layer with dependent layers is referred to as an antecedent to those layers. This dependency means that a given layer cannot be correctly decoded at the receiver, if any of its antecedent layers cannot be decoded due to error or loss. With respect to a single user, an antecedent layer is more important than any of its dependent layers and so for a given user it should be scheduled first.

Let $N_L$ denote the total number of layers in a single GOP of the user. Let $l$ denote the index of a layer in the GOP, where $l = 0, 1, ..., N_L-1$ and an antecedent layer has a lower index than any of its dependent layers. In essence, $l$ represents the priority in scheduling layers of a GOP for a given user. For multi-user scheduling the relative importance $v$ of a layer is defined as:

$$v(l) = 1 - \frac{\ell}{N_L} \quad (2)$$

If all users use the same number of coding layers $N_L$, prioritized scheduling of coding layers according to the above definition of importance, aims to ensure that all users send the same number of their most important layers. If different users have different numbers of coding layers $N_L$, prioritized scheduling of coding layers according to the above definition of importance, aims to ensure that all users send the same proportion of their most important layers. This approach, therefore, aims at delivering fairness to multiple users based on the qualitative importance of their video layers.

Since this approach focuses on the importance on a per-GOP basis, as defined in this specification, it does not distinguish between the importance of key pictures, in spite of the fact that a key picture may be dependent on preceding key pictures. This is justified by the argument that it is crucial for scalable video coding that all key pictures are received. Therefore, there is no need to distinguish between key pictures in scheduling.

For illustration in this specification, SVC with temporal scalability is considered, however, the inventive approach is applicable to other scalability models as well. Consider for example a hierarchical B frame GOP structure as follows {$K_oB_2B_1B_zK_0$...}, where $K_0$ is an I or P key picture (see Fig. 2). The number of coding layers is $N_L = 3$. Each layer is composed of one or more frames. The layers in order of importance are the key picture {K0} with index $l = 0$, {B1} with index $l = 1$, and {B2, B2} with index $l = 2$. The significance values are $v = 1$, $v = 2/3$ and $v = 1/3$, respectively.

<u>Fuzzy Interference</u>

In the field of controller design, fuzzy logic inference is one of the most popular approaches. Moreover, fuzzy control has been proposed for communication networks (see e.g. S. Setti, V. Kumar, N. Prasad, and N. Raju, "Implementation of fuzzy priority scheduler for MANET and performance analysis with reactive protocols," International Journal of Engineering Science and Technology, vol. 2, no. 8, pp. 3635-3640, Jan 2010; C. L. Chen, J. W. Lee, S. Y. Chen, and Y. H. Kuo, "Hierarchical cross-layer fuzzy control for compromise of multiple objectives in wireless mobile networks," in Proc. International Conference on Mobile Technology, Applications, and Systems (Mobility 08), vol. 6, Yilan, Taiwan, Sep. 2008, pp. 1-7). In general, a fuzzy-logic inference system is a nonlinear mapping of an input data vector into a scalar output and is widely used in fuzzy-logic controllers (see e.g. J. M. Mendel, "Fuzzy logic systems for engineering: A tutorial," Proceedings of the IEEE, vol. 83, no. 3, pp. 345-377, Mar. 1995). Fuzzy set theory establishes the specifics of the nonlinear mapping. A Fuzzy inference system is composed of a fuzzification interface, a fuzzy rule-base, a membership function data-base, a rule evaluation process and a defuzzification interface.

The fuzzification interface defines fuzzy sets, and determines the degree of membership of crisp (real value) inputs in appropriate fuzzy sets. The fuzzy rule-base contains a number of fuzzy (linguistic) *if-then* rules, which define the decision behavior of the fuzzy inference system. The membership function data-base defines the membership functions of the fuzzy sets associated with each input and output linguistic variable, and is used in the fuzzy rules. Each linguistic rule has the form "IF *condition* THEN *consequence". The* IF *"condition"* part of the rule is the rule antecedent or premise, while the "THEN *consequence"* part is the rule consequent. The rule antecedent determines to what degree a single input linguistic variable equals a linguistic value, i.e., its degree of membership in the fuzzy-set associated with the linguistic value. The consequent part of the rule is then true to the same degree. This number (the truth value) is then applied to the membership function of the output linguistic set of the rule consequent. The resulting value is assigned to a linguistic output variable and is the result of the evaluation of that rule. If a given fuzzy rule has multiple antecedents or consequents, the fuzzy operator (AND or OR) is used to obtain a single number that represents the result of the antecedent or consequent evaluation, respectively.

Two major types of fuzzy rules exist, namely, Mamdani fuzzy rules and Takagi-Sugeno (M. Sugeno, "Fuzzy control," North-Holland, 1988 - Sugeno, for short) fuzzy rules. The Mamdani fuzzy rule for a fuzzy inference system involving two input linguistic variables and one output linguistic variable can be described as follows:

$$\text{IF } x_1 \text{ is } X_1 \text{ FL_OPERATOR } x_2 \text{ is } X_2 \text{ THEN } y_1 \text{ is } Y_1; \quad (3)$$

where $x_1$ and $x_2$ are input variables and $y_1$ is the output variable. $X_1$, $X_2$ and $Y_1$ are fuzzy sets, and the FL_OPERATOR is either the Fuzzy logic AND or the OR operator.

Unlike Mamdani fuzzy rules, Sugeno fuzzy rules use functions of input variables as the rule consequent. A Sugeno fuzzy rule corresponding to the Mamdani rule above is

$$\text{IF } x_1 \text{ is } X_1 \text{ FL_OPERATOR } x_2 \text{ is } X_2 \text{ THEN } y_1 = f_1(x_1, x_2); \tag{4}$$

where $f_1()$ is a real function of any type. For zero-order Sugeno inference the function $f()$ is a constant value.

Finally, the defuzzification interface transforms the combined outputs of all the fuzzy rules into a crisp output.

Joint Multi-User Content-Aware and Channel-Aware Prioritized Scheduler

The scheduling algorithm in accordance with embodiments of the invention will now be described. The scheduling algorithm, at any time instant, allocates PRBs to users itera-tively. Let $\Phi_{ARB}(t,k)$ and $\Phi_{URB}(t,k)$ denote the set of allocated and unallocated PRBs, respectively, by iteration $k$ of time slot $t$. Let $\Phi_i(t,k)$ denote the set of PRBs allocated to user $i$ by iteration $k$ of time slot $t$, and $r_i(t, \varphi)$ is the attainable bit rate of the user on $PRB\varphi \in \Phi_{URB}(t,k)$. Therefore, each PRB has a corresponding user-dependent and time-varying channel quality that is represented by the maximum possible transmission rate for that user over that PRB. The expression for $r_i(t, \varphi)$ is given in equation (1) above.

For each user $i$, an antecedent layer is sent before any of its descendants. Let $v_i(t, k)$ denote the significance of the layer with the highest significance to be sent to user $i$ by iteration $k$ of time slot $t$. The utility of user $i$ by iteration $k$ of time slot $t$ on $PRB\varphi \in \Phi_{URB}(t,k)$ is

$$u_i(t,k,\varphi) = \mathrm{F}_{\mathrm{fuzzy}}[v_i(t,k), r_i(t,\varphi)], \tag{5}$$

where the function $\mathrm{F}_{\mathrm{fuzzy}}[v_i(t, k), r_i(t,\varphi)]$ is determined by zero-order Sugeno fuzzy inference.

*Computing User Utility Using Fuzzy Logic*

The function defining the user utility $u_i(t, k, \varphi) = F_{fuzzy}[v_i(t, k), r_i(t, \varphi)]$ is derived by applying the following fuzzy rule base.

1) *Rule1:* If *significance* $v_i(t, k)$ is *high* then *user_utility* is *high*
2) *Rule2:* If *significance* $v_i(t,k)$ is *low* then *user_utility* is *low*
3) *Rule3:* If *rate* $r_i(t, \varphi)$ is *high* then *user_utility* is *high*
4) *Rule4:* If *rate* $r_i(t, \varphi)$ is *low* then *user_utility* is *low*

The fuzzy inference is applied to every user $i$/PRB $\varphi$ pair for each iteration $k$ of time slot $t$, where $PRB\varphi \in \Phi_{URB}(t, k)$.

Let $V_{high}$ and $V_{low}$ denote fuzzy significance sets over the universe of discourse of *significance,* representing *high* and *low significance* sets, respectively. Let $U_V(V)$ denote a consequent fuzzy singleton that is a function of *significance,* and is defined over the universe of discourse of *user_utility.* $U_V(V_{high})$ and $U_V(V_{low})$ represent the *high* and *low* consequents of *Rule1* and *Rule2,* respectively. Let $\mu_V(v_i(t,k), V)$ denote the degree of membership or membership function of *significance* with a crisp value $v_i(t, k)$ in the fuzzy set $V \in \{V_{high}, V_{low}\}$.

Let $R_{high}$ and $R_{low}$ denote fuzzy rate sets over the universe of discourse of *significance,* representing *high* and *low rate* sets, respectively. Let $U_R(R)$ denote a consequent fuzzy singleton that is a function of *rate,* and is defined over the universe of discourse of *user_utility.* $U_R(R_{high})$ and $U_R(R_{low})$ represent the *high* and *low* consequents of *Rule3* and *Rule4,* respectively. Let $\mu_R(r_i(t, \varphi), R)$ denote the degree of membership or membership function of rate with a crisp value $r_i(t, \varphi)$ in the fuzzy set $R \in \{R_{high}, R_{low}\}$.

Applying a zero-order Sugeno fuzzy inference results in a crisp value for *user_utility u* expressed as:

$$u_i(t,k,\varphi) = F_{\mathrm{fuzzy}}[v_i(t,k), r_i(t,\varphi)] \equiv \frac{\sum_{\mathrm{V}}\left(\mu_{\mathrm{V}}(v_i(t,k,\varphi),V)U_{\mathrm{V}}(V)\right) + \sum_{\mathrm{R}}\left(\mu_{\mathrm{R}}(r_i(t,k,\varphi),R)U_{\mathrm{R}}(R)\right)}{\sum_{\mathrm{V}}\mu_{\mathrm{V}}(v_i(t,k,\varphi),V) + \sum_{R}\mu_{\mathrm{R}}(r_i(t,k,\varphi),R)} \tag{6}$$

The first summation in the numerator of equation (6) is the combined outputs of the fuzzy rule evaluations of *Rule1* and *Rule2,* while the second summation is the combined outputs of rule evaluations of *Rule3* and *Rule4.*

The above expression is simplified by selecting membership functions such that $\sum_V \mu_V(v_i(t,k,\varphi), V) = 1$ and $\sum_R \mu_R(r_i(t,k,\varphi), R) = 1$. In this case

$$u_i(t,k,\varphi) \equiv 0.5\left[\sum_V \left(\mu_V(v_i(t,k,\varphi),V)U_V(V)\right) + \sum_R \left(\mu_R(r_i(t,k,\varphi),R)U_R(R)\right)\right] \quad (7)$$

In general, the fuzzy singletons $U_V(V_{low})$ and $U_R(R_{low})$ can have any real values in the range between 0 and 1, under the constraints that $U_V(V_{low}) < U_V(V_{high})$ and $U_R(R_{low}) < U_R(R_{high})$, respectively. To simplify the performance optimization problem, the possible values of the consequent fuzzy singletons are further constraint. First, $U_V(V_{low}) = U_R(R_{low}) = 0$. The expression for utility is then further simplified as follows:

$$u_i(t,k,\varphi) \equiv 0.5\left[\mu_V(v_i(t,k,\varphi),V_{high})U_V(V_{high}) + \mu_R(r_i(t,k,\varphi),R_{high})U_R(R_{high})\right] \quad (8)$$

Furthermore, the possible values of $U_V(V_{high})$ and $U_R(R_{high})$ are constraint such that $U_V(V_{high}) = \alpha$ and $U_R(R_{high}) = 1-\alpha$, where $\alpha$ is referred to as the *utility coefficient* and determines the trade-off between content awareness and channel awareness.

Linear membership functions are used. The membership functions are $\mu_V(v) = v$ and $\mu_R(r) = r/r_{max}$ for $V = V_{high}$ and $R = R_{high}$, respectively, where $r_{max}$ is the maximum rate in bits/s that can be supported over any single PRB when using the highest order modulation with no coding overhead ($r_i(t,\varphi) \leq r_{max}$). The universe of discourse for *significance* is the range of possible values of $v_i(t,k,\varphi)$, which are all real numbers between 0 and 1. The universe of discourse for the rate is the range of possible values of $r_i(t, k, \varphi)$, which are all real numbers between 0 and $r_{max}$.

*The Scheduling Algorithm*

An initial buffer delay or maximum delay constraint $T_D$ is defined for the scheduler. Each user must receive one or more GOPs, depending on its GOP rate, in this time duration. When a user needs to receive a number g of GOPs in this time period, then there are g layers in total with the same index *l*. The scheduler treats these as a single layer with index *l* and ensures that they are sent before any of the g layers in total with the same index *l*+1. At the receiver, the layers are re-ordered and reconstituted into frames according to their playback order.

The iterative algorithm operates as follows at any iteration *k* at time *t*:

1) For $|\Phi_{URB}(t,k)| > 0$, fmd a PRB-user pair which has the highest user utility among all available PRBs and users.
2) $\{i^*, \varphi^*\} = \arg\max_{\forall i,\varphi \in \Phi_{URB}(t,k)} u_i(t, k, \varphi)$
3) Allocate PRB$\varphi^*$ to user $i^*$:

$$\Phi_{PRB,i^*}(t,k+1) = \Phi_{PRB,i^*}(t,k) + \{\varphi^*\}$$

4) Delete the PRB from the set of available PRBs:

$$\Phi_{URB}(t,k+1) = \Phi_{URB}(t,k) - \{\varphi^*\}$$

5) Repeat the steps above until all PRBs are allocated, i.e., until $|\Phi_{URB}(t,k)| = 0$
6) Repeat the above steps for new time-slot $t = t + T_{PRB}$, where $T_{PRB}$ is the time duration of a single PRB.

In other words, in accordance with embodiments an iterative allocation process per time-slot is provided, wherein for each iteration a PRB-user pair is selected which has the highest utility among all available PRB-user pairs. The PRB is allocated to the user and deleted from the set of available PRBs. The just-mentioned steps are repeated until all PRBs are allocated in the current time-slot and the steps are then repeated for the next time-slot. An embodiment of this method will be described in the following in further detail on the basis of Figs. 3 to 6.

Fig. 3 is a schematic representation illustrating an embodiment of the inventive scheduler implementing the allocation process as, for example, performed in the base station of a wireless network. In Fig. 3, a plurality of users 1,...,i is assumed, each user having associated a buffer $200_1$ to $200_i$ for receiving data blocks representing data of the scalable video stream. More specifically, in the buffers $200_1$ to $200_i$ the respective data blocks are associated with the respective layers of the scalable video stream and are arranged within the buffer in accordance with their importance. A joint content and channel-aware scheduler 202 is provided which receives from the respective buffers $200_1$ to $200_i$, the data blocks for forwarding same in accordance with the inventive scheduling process to the respective users served by the base station incorporating the scheduler. In Fig. 3, the available physical resource blocks (PRBs) are shown at 204 and on the basis of these available blocks, the per-user/per-PRB channel quality is determined and sent back to the scheduler as an input 206. The scheduler 202 outputs the packets per-user per-PRB to an output buffer 208 in which the respective data blocks for the respective users are stored in accordance with their priority.

Fig. 4 is a flow diagram depicting the scheduling method of the scheduler 202 (see Fig. 3). The method starts at step 300 and at step 302 it is determined as to whether there are any active users with non-empty buffers $200_1$ to $200_i$. If no such active users exist, the method ends at step 304. In case active users with non-empty buffers exist, the method proceeds to step 306 where it is determined as to whether in a current time-slot there are still PRBs available. If this is not the case, the method will go to step 308 and the current iteration is left and a new iteration is entered, i.e., the method goes to the next time-slot so that the current time-slot is now the next time-slot. The method then returns to step 306. In case it is determined in step 306 that PRBs are available in the current time-slot, at step 310 the significance of the head-of-line (HOL) layer in the buffer of each active user is determined in a way as has been described above in detail. Also, at step 312, for each user the quality of all available PRBs in the current time-slot is measured. With regard to step 310 it is noted that the significance value, in general, only changes when the HOL layer has been completely transmitted. In step 312, at most, one measurement for each PRB per user per time-slot is required. Thus, scheduler 202 determines, on the basis of the information received from the respective buffers $200_1$ to $200_i$, the significance of step 310 and receives for each user the measured quality 206 at step 312. The outputs of step 310 and 312 are the inputs to step 314 where, for each user, the utility of all available PRBs is determined as a fuzzy-logic function of the HOL layer significance and the PRB quality, as has been described above in detail.

Once the utility has been determined, at step 316 a user-PRB pair is selected that maximizes the utility. The selected PRB is then deleted from the list of available PRBs in the current time-slot in step 318 and the buffer of the selected user is updated in step 320. The method then returns to step 302.

Fig. 5 shows a block diagram illustrating the inventive process for determining the utility (PRB utility) of all available PRBs in further detail in accordance with an embodiment. In Fig. 5, steps 310 and 312, described above, are shown which provide the respective inputs to the step 314 for determining the PRB utility. The output of steps 310 and 312 are received at a fuzzy rule evaluation step 314a which, in accordance with the above-described principles, generates the respective rule outputs which are input into the aggregation function step 314b. The aggregation function step 314b further receives set function parameters which are determined by steps 314c and 314d. Step 314c provides application-aware QoS (Quality of Service) measurements and step 314d provides application-aware QoS requirements. On the basis of the rule outputs and the set function parameters, as described above, the PRB utility is determined and output to the step 316 of Fig. 4.

In the following, an example of the inventive allocation process is described with regard to Fig. 6. Fig. 6(a) shows the allocation process for a first time-slot. It is assumed that only two users are present and the significance for each user for data blocks to be transmitted is as follows:

data block 1 - significance value = 1
data block 2 - significance value = 0.7
data block 3 - significance value = 0.3

Thus, the values of significance shown in Fig. 6(a) indicate the significance for the first layer, the second layer and the third layer of the scalable video stream which, for both users, is 1, 0.7, 0.3. These values are determined in step 310 of the method as described above.

Step 312 yields the PRB quality for PRB1 and PRB2. These are considered the available PRBs in the current time-slot (time-slot one). The PRB quality for user 1 is as follows:

PRB1=1
PRB2 = 0.5

The PRB quality for user 2 is as follows:

PRB1 = 0.2
PRB2 = 0.4

Thus, one can assume that user 1 is a user closer to the cell center, whereas user 2 is closer to the cell edge. It is assumed that the significance and the PRB quality is constant for the considered time-slot one and does not change during the iteration. In step 314 described with regard to Figs. 4 and 5, the utility or PRB utility for the users is determined and in the first iteration, in accordance with the fuzzy logic, PRB1 is allocated to the first layer of user 1.

Thus at the end of iteration 1, the first layer of user 1 has been allocated to PRB1 so that for the second iteration, iteration 2, the first layer of user 1 no longer needs to be considered. Further, since PRB1 has been allocated to user 1 in the first iteration, at step 318, PRB1 is removed from the list of available PRBs, as shown at iteration 2 in Fig. 6(a). On the basis of the remaining significance values and PRB qualities in accordance with the fuzzy logic, it is determined that user 2 has the higher utility and, therefore, PRB2 is allocated to the first layer of user 2. Again, the allocated PRB is removed from the available PRBs in the current time-slot so that, in the illustrated example, all PRBs have been allocated in the current time-slot as is shown at iteration 3 where no further allocation takes place as no PRBs are available. Thus, at step 306 in Fig. 4 it will be determined that no PRBs in the current time-slot are available so that the method moves to the next time slot, time slot 2 (see Fig. 6(b)). In step 302 of the method, it is determined that still non-empty buffers exist and, more specifically, for users 1 and 2 further layers are still available in the buffer having the remaining significance values of 0.7 and 0.3. For the new time slot, new PRB quality measurements are carried out yielding a PRB quality for user 1 of 1 for PRB1 and 0.1 for PRB2, and a PRB quality for user 2 of 0.5 for PRB 1 and 0.8 for PRB 2.

In the way as described above, this information is combined by the fuzzy approach for determining the utility and the obtained utility values are indicated in Fig. 6(b) which, for user 1, are 0.7 for PRB 1 and 0.07 for PRB 2. For user 2 the utility values are 0.35 for PRB1 and 0.56 for PRB2. This will result in an allocation of PRB1 to the second layer of user 1. The method then goes to the next iteration, iteration 2, wherein, on the basis of the utility value, PRB2 will be allocated to the second layer of the second user, user 2. Then, in iteration 3, it is determined that all PRBs are allocated in the current time-slot, so that the method goes to the next time-slot. For the subsequent time-slots, the above described steps will be repeated.

Fig. 6(c) shows the normalized significance throughput over the number of users in a cell comprising cell-edge users and cell-center users. Fig. 6(c) illustrates the advantages achievable by the inventive iterative allocation process described above in accordance with the embodiments shown in Figs. 4 to 6. As can be seen, for a channel-aware only approach ($\alpha$ = 0) only a poor performance for all users is achieved which is exacerbated by the fact that multi-user diversity is not exploited. More specifically, while a high number of cell-center users, in such an approach, may be served, the number of cell-edge users which can be served drastically decreases with the number of users. On the other hand, when applying a content-aware only approach the number of users that can be served sufficiently (ful-filling a desired performance parameter) also drops drastically with an increase of users. When applying the inventive content and channel aware approach, for example by applying a utility coefficient $\alpha$ = 0.5, a significant increase in the possible numbers of users that can be served can be seen.

<u>Performance Metrics and Parameters</u>

There are two key system parameters for the joint multi-user content and channel aware scheduling, namely the utility coefficient $\alpha$ and the number of users ***N.*** Specifically, a single tagged user is considered for observation and $N$-1 competing users. The tagged user is representative of all users within a limited area of the sector. The utility coefficient $\alpha$ determines to what extent the scheduler prioritizes according to channel quality or content importance.

A novel key performance metric is described now for evaluating the performance of content-aware scheduling. This metric is the normalized significance throughput $Z_{sig}(p)$. Other metrics used are the bit throughput $Z_{bit}(p)$ in bits/s and average PSNR $Q_P(p)$, respectively. The metrics are computed for a tagged user at a random distance d from the BS, where $d \leq d_{sec}(p)$. The area of the 120° sector-shaped region centered at the BS occupied by the tagged user is $\pi d_{sec}(p)^2/3$ and is defined to equal $p$% of the total area of the sector. Assuming a uniform distribution of users, this area contains $p$% of the total number of users.

<u>Analytical Model</u>

There are $m$ PRBS per time-slot, where a time-slot is the allocation period for the scheduler. The allocation over a period of $N_{TS}$ time slots is considered, where the duration of a time-slot is $T_{PRB}$ seconds.

It is assumed that the time $T_{PRB}N_{TS}$ is the maximum delay constraint $T_D$ for the reception of all layers belonging to one or more GOPs of a user. The frame rate $R_{\text{frame}}$ is related to the delay constraint as $R_{\text{frame}} = gN_{\text{frame}}/T_D$, where $N_{\text{frame}}$ is the number of frames per GOP and $g$ is the number of GOPs sent in $T_D$. The GOP rate is $g/T_D$ and is determined by how the video has been coded. A period of operation of the scheduling algorithm over the duration $T_D$ is considered. Fig. 7 shows the time and frequency distribution of PRBs over a single allocation period.

A given layer $l$ of a tagged user $i$ competing with the layers of N-1 other users is considered. Associated with each layer, after the last iteration of the last slot in this period, is a set of PRBs from the pool of $M_{\text{PRB}} = mN_{\text{TS}}$ PRBs. The set of PRBs associated with each layer represents the minimum number of an arbitrary grouping of PRBs required to send the layer to the user within the $T_D$ time period, where feasible, or the total number of PRBs, otherwise. Each PRB from this set falls into two categories. Either the PRB was allocated to the user and used to send bits of the layer or it was not allocated due to competition. Associated with the set of PRBs is an average rate per PRB $R_i(d)$ which is a function of the user's distance $d$ from the BS, and the long-term shadow fading. It is assumed that short-term frequency selectivity across the set of PRBs is effectively mitigated using diversity, such as frequency domain equalization, interleaving/coding and distributed subcarrier allocation for each PRB. This implies that $r_i(t, \varphi) = R_i(d)$ for all $t$ and all $\varphi$. This assumption simplifies the analysis and though it increases the complexity of the physical layer, these suggested diversity schemes are features of advanced OFDMA standards such as LTE. It is assumed that MIMO is used in antenna diversity mode and not in spatial multiplexing mode, such that $G_{\text{mux}} = 1$.

$$R_i(d) = B\log_2(1 + e_{\text{fade}}\gamma_i(d)) \qquad (9)$$

where $\gamma_i(d)$ is the mean SNR and $e_{\text{fade}}$ is the shadow fading random variable with pdf $f_{\text{fade}}(e)$· The pdf of $R_i(d), f_R(r,d)$ is obtained as a transformation of $f_{\text{fade}}(e)$.

Users are assumed to be uniformly distributed in the sector, where the radius of the sector is $d_{\text{rad}}$ and its area is $A_{\text{sec}} = \pi d^2_{\text{rad}}/3$. The area of the 120° sector centered at the BS and occupied by $p\%$ of the users is $0.01pA_{\text{sec}}$ and has a radius $d_{sec}(p) = (0.03pA_{\text{sec}}/\pi)^{0.5}$. The distance $d$ of a single user within the sector defined by radius $d_{\text{sec}}(p)$ is a random variable determined by the uniform user distribution with a pdf $f_d(d,p)$, where $d \leq d_{\text{sec}}(p) \leq d_{\text{rad}}$ and $d_{\text{sec}}(100\%) = d_{\text{rad}}$.

Let $N_{\text{bits}}(l,i)$ denote the number of bits of layer $l$ of user $i$, which has a probability mass function $P_{\text{LB}}(\kappa,l,i)$. Let $N_{\text{PRB}}(l,i,d)$ denote the number of PRBs required to send layer $l$ of user $i$, then:

$$N_{\text{PRB}}(l,i,d) = \left\lceil \frac{N_{\text{bits}}(l,i)}{R_i(d)T_{\text{PRB}}} \right\rceil \qquad (10)$$

Let $P_{\text{PRB}}(k,l,i,d)$ denote the probability mass function of $N_{\text{PRB}}(l,i,d)$, which is derived from $P_{\text{LB}}(k,l,i)$ and $f_R(r,d)$.

Let $v_{i,l}$ denote the significance of layer $l$ of user $i$, and let $u_{i,l}(d)$ denote the utility of user $i$ when sending bits of layer $l$.

$$u_{i,l}(d) = \mathrm{F}_{\text{fuzzy}}[v_{i,l}, R_i(d)], \qquad (11)$$

Let $f_u(l,i,d)$ denote the pdf of $u_{i,l}(d)$, which is derived from $f_R(r,d)$. Let $S_{i,l}(d)$ denote the number of bits of layer $l$ of user $i$ that are transmitted before the delay constraint. Let $i$ denote the index of a competing user and $l$ the index of a layer of this user. Let $S_{\text{PRB}}(l,i,d)$ denote the sum of PRBs required to send the layers of the competing users that have a higher utility than the tagged user and the layers of the tagged user up to but not including layer $l$. For $l > 0$

$$S_{\text{PRB}}(l,i,d) = \sum_{\hat{i}=0,\hat{i}\neq 0}^{N-1} \sum_{\hat{l}=0}^{N_L(\hat{i})-1} N_{\text{PRB}}(\hat{l},\hat{i},\hat{d})\mathrm{I}(u_{\hat{i},\hat{l}}(\hat{d}) > u_{i,l}(d)) + \sum_{\lambda=0}^{l-1} N_{\text{PRB}}(\lambda,i,d) \qquad (12)$$

where the function I(*condition*) equals 0, if *condition* is false and equals 1, otherwise. For $l = 0$

$$S_{\mathrm{PRB}}(l,i,d)=\sum_{\hat{i}=0,\hat{i}\neq 0}^{N-1}\sum_{\hat{l}=0}^{N_{\mathrm{L}}(\hat{i})-1}N_{\mathrm{PRB}}(\hat{l},\hat{i},\hat{d})\mathrm{I}(u_{\hat{i},\hat{l}}(\hat{d})>u_{i,l}(d)) \tag{13}$$

The difference $M_{\mathrm{PRB}}$-$S_{\mathrm{PRB}}(l,i,d)$ determines the number of PRBs available to send layer $l$ of the tagged user. If this difference is zero or negative, then no bits of the layer are sent. If it is non-zero, positive, and less than $N_{\mathrm{PRB}}(l,i,d)$, then some but not all bits of the layer are sent. If it is non-zero, positive, and equal to or more than $N_{\mathrm{PRB}}(l,i,d)$, then all bits of the layer are sent. Therefore, the number of bits of layer $l$ of user $i$ that are transmitted before the delay deadline is

$$S_{i,l}(d)=\begin{cases}0 & \text{if} \quad M_{\mathrm{PRB}}-S_{\mathrm{PRB}}(l,i,d)\leq 0\\ R_l(d)T_{\mathrm{PRB}}\mathrm{E}\{M_{\mathrm{PRB}}-S_{\mathrm{PRB}}(l,i,d)\} & \text{if } 0<M_{\mathrm{PRB}}-S_{\mathrm{PRB}}(l,i,d)<N_{\mathrm{PRB}}(l,i,d)\\ R_l(d)T_{\mathrm{PRB}}\mathrm{E}\{N_{\mathrm{PRB}}(l,i,d)\} & \text{if} \quad M_{\mathrm{PRB}}-S_{\mathrm{PRB}}(l,i,d)\geq N_{\mathrm{PRB}}(l,i,d)\end{cases} \tag{14}$$

where E{x} denotes the statistical mean of x.

The normalized significance throughput $S_{\mathrm{sig}}(d)$ of a user at distance d from its BS is

$$S_{\mathrm{sig}}(d)=\frac{1}{N_{\mathrm{L}}(i)}\sum_{l=0}^{N_{\mathrm{L}}(i)-1}\rho_l\frac{S_{i,l}(d)}{\mathrm{E}\{N_{\mathrm{bits}}(l,i)\}} \tag{15}$$

where $\rho_l$ is zero if any of the antecedent layers of layer $l$ is missing and unity otherwise.

The average PSNR $Q(d)$ of a user at distance $d$ from its BS is

$$Q(d)=\sum_{l=0}^{N_{\mathrm{L}}(i)-1}\rho_l(q_l-q_{l-1})\frac{S_{i,l}(d)}{\mathrm{E}\{N_{\mathrm{bits}}(l,i)\}} \tag{16}$$

where $q_l$ is the average PSNR if all $l$ + 1 layers have been received without error and equals zero for $l$ < 0.

The normalized significance throughput $Z_{\mathrm{sig}}(p)$ of a user among the $p$% of users closest to the BS is

$$Z_{\mathrm{sig}}(p)=\int_0^{d_{\mathrm{sec}}(p)}f_d(d,p)S_{\mathrm{sig}}(d)\mathrm{d}d \tag{17}$$

The average quality $Q_{\mathrm{P}}(p)$ of a user among the $p$% of users closest to the BS is

$$Q_{\mathrm{P}}(p)=\int_0^{d_{\mathrm{sec}}(p)}f_d(d,p)Q(d)\mathrm{d}d \tag{18}$$

Fig. 8 shows a table of the symbols used in this specification.

Numerical Results

All users are assumed to be streaming video sequences with identical traffic and quality statistics. Specifically, statistics of the first hour of the *Tokyo Olympics* video (see G. V. der Auwera, P. T. David, M. Reisslein, and L. J. Karam, "Traffic and quality characterization of the H.264/AVC scalable video extension," Eurasip Journal on Advances in Multimedia, vol. 25, no. 2, 2008) are used. Traffic statistics, quality statistics, and traces for this video sequence are publicly available at http://trace.eas.asu.edu/, "H.264/AVC and SVC video trace library". The video sequence is in Common Intermediate Format (CIF, 352 × 288 pixels), at 30 frames/s. The temporal layers are embedded in the video stream encoded with H.264 SVC, with quantization parameter $Q_P$ = 48. The codec used is the SVC reference software named JSVM (version 5.9). The GOP structure is $\{K_0B_2B_1B_2K_0..\}$, where K0 is an I or P key picture. Thus, $N_L$ = 3 and $l \in \{0, 1, 2\}$. The probability distribution $P_{LB}(k,l,i)$ of layer $l$ and the set of average quality values $q_l$ are obtained from http://trace.eas.asu.edu/, "H.264/AVC and SVC video trace library." In http://trace.eas.asu.edu/, "H.264/AVC and SVC video trace library", average quality values for I frames, P frames and B frames are provided for each layer.

Note that, with the assumptions made, the frame pattern of the temporal base layer ($l$ = 0) is $\{K_0000K_0...\}$, where zeros replace the frames of temporal enhancement layers 1 and 2. In the case of the CIF sequence at a frame rate of 30 frames per second (fps), the temporal base layer represents a stream with a frame rate of 7.5 fps, whereas the combination of the base layer and the first enhancement layer increases the frame rate to 15 fps, and the reception of the second enhancement layer results in a frame rate of 30 fps. For the calculation of the video quality associated with receiving only some temporal layers no simple averaging of the PSNR values of the base layer frames is done, since the corresponding value would be unrealistically high compared to the subjective quality perceived by human observers. In order to consider the perceptual quality degradation in the objective quality measurement through PSNR, it is assumed that the decoder duplicates a received base layer frame until the next frame is received and decoded. Then the sequences at a frame rate of 30 fps are compared. The same procedure is adopted for comparing the quality of the sequence with the base layer and the first enhancement layer with the original sequence at 30 fps.

In this specification, following G. V. der Auwera, P. T. David, M. Reisslein, and L. J. Karam, "Traffic and quality characterization of the H.264/AVC scalable video extension," Eurasip Journal on Advances in Multimedia, vol. 25, no. 2, 2008, for the considered sequence the values $q_0$ = 26.94dB, $q_1$ = 28.43dB and $q_2$ = 29.32dB are used, where the latter value is coincident with the quality of the sequence when encoded in a single layer.

For the wireless system, parameter values are taken mostly from 3GPP TR 25.814 V7.1.0, "Physical layer aspects for evolved universal terrestrial radio access (utra) (release 7)," Sep. 2006, and 3GPP TS 36.211 V8.2.0, "Eutra physical channels and modulation (release 8)," Mar. 2008. The channel is assumed to be flat in time and frequency due to the OFDM modulation and the effective exploitation of diversity in the time and frequency domains. Independent log-normal shadow fading with pdf $f_{fade}(e)$ and a standard deviation of 8dB has been assumed. The values for the BS antenna gain, UE antenna gain, UE noise figure and total sector TX power are 14dBi, 0dBi, 7dB and 46dBm, respectively. The time-slot duration $T_{PRB}$ is 0.5ms. The coverage of the sector has a radius of 250m. The maximum number of PRBs per sector $m$ is 34 per slot, with each PRB having a bandwidth of 180kHz. Furthermore, a maximum spectral efficiency of 6bits/s/Hz in each PRB is assumed, for 64QAM modulation without MIMO spatial multiplexing. Therefore, the maximum bit rate per PRB $r_{max}$ is 1080kbits/s. A 2 × 2 MIMO antenna diversity gain of 6dB is assumed. The distance-dependent path gain is given by $G(d)[dB] = -128.1 - 37.6\log_{10}(d)$.

Of all the statistical distributions used in the analytical model, the distributions $P_{LB}(k,l,i)$ and $f_{fade}(e)$ are all given: the former is obtained empirically from http://trace.eas.asu.edu/, "H.264/AVC and SVC video trace library", while the latter is assumed to be lognormal. The pdf of $f_d(d,p)$ is derived from a transformation, given that $d^2$ is uniformly distributed over the range $(0,d_{sec}(p))$. The other distributions mentioned above are derived from one or more of these three distributions, and are obtained numerically from Monte-Carlo simulations.

Fig. 9 shows a plot of PSNR versus number of users for different classes of users and for $\alpha$ = 0, where users are classified according to the region they occupy in the sector. The parameter $\alpha$ is the *utility coefficient* and determines the trade-off between content awareness and channel awareness. Therefore, this scenario corresponds to channel-aware only scheduling. The results show that the closest 20% of users achieve the maximum PSNR performance over the entire observed range. The PSNR deteriorates at a rapid rate the further the range of users considered.

Fig. 10 shows the corresponding plot using the normalized significance throughput metric for different classes of users and for $\alpha$ = 0. The results show that the closest 20% of users achieve the maximum normalized significance throughput of unity, hence the maximum PSNR performance, over the entire observed range. A frame rate of 30 fps is considered, which maps to a maximum delay constraint of 0.1333s to deliver all the layers comprising the 4 frames of the GOP. The normalized significance throughput follows the same trend as the PSNR and deteriorates at a rapid rate the further the range of users considered. Fig. 11 and Fig. 12 show the corresponding plots using the normalized significance throughput for $\alpha$ = 0.25 and $\alpha$ = 0.5, respectively. These plots show the impact of introducing content-awareness, while reducing proportionately the extent of channel awareness. The results show that the performance of the closest 20% of users declines at a rapid rate as $\alpha$ is increased from zero to 0.5, while the performance of the users measured over larger distance ranges improves at a slower rate. For $\alpha = 0.5$, the performance across all distance ranges have converged significantly.

The objective of introducing content awareness is to improve the fairness of the scheduling algorithm, in general, and particularly to enhance the performance of distant users at a minimum penalty to users close to the BS. For illustration, a minimum normalized significance throughput target for the closest 20% of users is considered to be 2/3, which corresponds to receiving the most important two out of the three layers. For the closest 100% of users, that is all users, a minimum significance is considered to be 1/3, which corresponds to receiving the most important one out of the three layers. With these constraints, the maximum number of users that can be supported increases from 78 to 90 (a 15% enhancement), as $\alpha$ increases from 0 to 0.25. It declines to 72 as $\alpha$ increases from 0.25 to 0.5.

Figs 13 to 15 show plots of normalized significance throughput versus number of users for different maximum delay constraints, corresponding to slightly reduced frame rates. Since the playback rate is constant at 30 fps, reducing the frame-rate at the scheduler implies that the video sequence will experience short pauses. The shorter the pauses the less perceptible they are to the user. Fig. 13 and Fig. 15 show the case for 100% of the users with $\alpha$ equal to zero and 0.25, respectively, while Fig. 14 shows the case for 20% of the users and $\alpha = 0.25$.

Figs. 16 and 17 show blocks of further examples for a normalized significance throughput. In Fig. 16, the throughput for different numbers of cell-edge users and cell-center users for different utility coefficients $\alpha$ are depicted. As can be seen, for a target minimum performance of 0.6 for cell edge users and 0.95 for cell center users, the performance is enhanced from 25 to 35 users, for $\alpha = 0.01$. When compared to the channel-aware only approach ($\alpha = 0$) this means a 40% increase in users which can be served. In Fig. 17, an approach is described where pauses of 0.133 seconds every four frames are tolerated. In such a situation, for a target minimum performance of 0.6 for cell edge users and 0.95 for cell center users, the performance is enhanced from 25 to 45 users, for $\alpha = 0.01$. When compared to the channel-aware only approach ($\alpha = 0$) this means an 80% increase in users that can be served.

The results show that increasing the delay constraint increases the normalized significance throughput, and hence PSNR, for all cases. The results show that significant performance improvement is possible for small increases in delay, or equivalently small reductions in frame rate. Assume an increase in the delay constraint from 0.1333s to 0.1583s, corresponding to a reduction in frame rate at the scheduler from 30 fps to 25.27 fps; given the constraints on the minimum normalized significance throughput for the closest 20% and 100% users mentioned above, the maximum number of users that can be supported with a satisfactory quality increases from 91 to 109 (a 19.8% enhancement), as $\alpha$ increases from 0 to 0.25.

Thus, embodiments of the invention provide a new fuzzy-logic based joint content/channel-aware multiple user downlink (DL) scheduling algorithm for video streaming. Using novel content-aware and standard performance metrics, the performance of the scheduling algorithm is evaluated using a new analytical model. The fuzzy logic controller allows a single utility parameter to be defined and enables a trade-off between content and channel-awareness to enhance overall user experience throughout the coverage area. The results show that the number of supported users can be enhanced by as much as 15%, for playback without pauses and as much as 19% if short imperceptible pauses are acceptable. Previous studies (see S. van Kester snd T. Xiao, R. E. Kooij, K. Brunnstrm, and O. K. Ahmed, "Estimating the impact of single and multiple freezes on video quality," in Proc. SPIE Conf. on Human Vision and Electronic Imaging XVI, vol. 7865, San Francisco Airport, California, USA,) have shown that a pause duration, as high as 0.36s, is considered acceptable.

Significantly, the results demonstrate that channel-aware only and content-aware only schemes are in-adequate for supporting video services in a cellular environment. The former delivers disproportionately good quality to users close to the BS, while users at the sector edge are unable to meet a minimum quality requirement. The latter significantly penalizes users with good channels, while the improvement in the performance of edge users remains minimal. The inventive algorithm allows a fairer allocation of resources among users across the entire sector coverage, allowing for the enhancement of video quality at edges of the cell while minimizing the degradation to users closer to the BS.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed. Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier. In other words, an embodiment of the inventive method is, there-fore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

**1.** A method for scheduling a scalable video coding SVC stream to one or more users ($UE_1$, $UE_2$) in a wireless mobile network, the method comprising:

(a) determining (310, 312, 314) a physical resource block PRB user pair having a highest utility among the available PRBs and users; and
(b) allocating (316) the PRB of the pair to the user of the pair,

**characterized in that**
the utility is determined using fuzzy logic inference, the input of the fuzzy inference comprising a significance of a layer of the SVC stream to be scheduled to the user and a transmission rate for the user over the PRB.

**2.** The method of claim 1, wherein
each PRB comprises a corresponding user dependent and time varying channel quality between a node of the wireless mobile network and the user that is represented by the maximum possible transmission rate for the user over the PRB, and
the SVC stream comprises a plurality of layers, an antecedent layer having a higher or lower layer index than any of its dependent layers, the antecedent layer being sent to the user before any of its dependent layers, and the significance indicating the importance of a SVC layer to be sent to the user based on the layer index of the SVC layer.

**3.** The method of claim 1 or 2, wherein the fuzzy rules for the fuzzy logic inference comprise:

(1) if significance is high then utility is high,
(2) if significance is low then utility is low,
(3) if rate is high then utility is high,
(4) if rate is low then utility is low.

**4.** The method of one of claims 1 to 3, wherein the fuzzy logic inference is a zero- order Sugeno fuzzy inference on the basis of which the utility is expressed as follows:

$$u_i(t,k,\varphi) \equiv 0.5[\mu_V(v_i(t,k,\varphi),V_{HIGH})U_V(V_{HIGH}) + \mu_R(r_i(t,k,\varphi),R_{HIGH})U_R(R_{HIGH})]$$

$u_i$ = utility,
$u_V$ = degree of membership or membership function of significance with a crisp value,
$\mu_R$ = degree of membership or membership function of rate with a crisp value,
$v_i(t, k, \varphi)$ = significance of a SVC stream layer having the highest significance to be sent to the user in a time slot $t$ using a subcarrier $k$ of the PRB$\varphi$,
$r_i(t, k, \varphi)$ = attainable bit rate of the user on the PRB$\varphi$ in the time slot $t$ using subcarrier $k$ of PRB$\varphi$,
$V_{HIGH}$ = high significance set,
$R_{HIGH}$ = high rate set,
$U_V(V_{HIGH}) = \alpha$,
$U_R(R_{HIGH}) = 1 - \alpha$, and
$\alpha$ = utility coefficient determining a trade-off between content and channel awareness upon scheduling the SVC stream.

**5.** The method of one of claims 1 to 4, wherein the wireless mobile network comprises one or more nodes (100), a node (100) serving a plurality of users ($UE_1$, $UE_2$), wherein a group of pictures GOP of the SVC stream is transmitted during a plurality of time slots, each time slot comprising a plurality of PRBs, each PRB comprising a plurality of subcarriers, and wherein the method repeats steps (a) and (b) for each time slot and for each subcarrier in a time slot.

**6.** The method of claim 5, wherein SVC stream data to be sent to the respective users ($UE_1$, $UE_2$) is buffered, and the method comprising:

(i) determining (302) for a current time slot whether there are any active users served by the node for which SVC stream data is buffered,
(ii) if there are active users then determining (304) whether there are any unallocated PRBs available in the current time slot,
(iii) if there are no unallocated PRBs available then going (308) to the next time slot,
(iv) if there are unallocated PRBs available then determining (310) the significance of a SVC stream layer represented by the buffered SVC stream data, and determining (312), for each active user, the quality of all unallocated PRBs in the current time slot,
(v) for each user determining (314, 314a-314d) the utility of all unallocated PRBs as a fuzzy logic function of the layer significance and the PRB quality, and
(vi) selecting (316) the user-PRB pair that maximizes the utility.

**7.** The method of claim 6, further comprising:

(vii) removing (318) the selected PRB from a list of unallocated PRBs in the current time slot,
(viii) updating (320) a buffer ($200_1$-$200_i$) of the selected user, and
(ix) repeating steps (i) to (viii).

**8.** The method of claim 6 or 7, wherein in step (iii) the next time slot becomes the current time slot and the method returns to step (ii).

**9.** The method of one of claims 1 to 7, wherein the significance of a layer $l$ of the SVC stream is determined as follows:

$$v(l) = 1 - \frac{l}{N_L}$$

$N_L$ = total number of layers in a single group of pictures GOP of the user.

**10.** The method of one of claims 1 to 8, wherein the transmission rate for the user $i$ over the PRB$\varphi$ at a time $t$ is determined as follows:

$$r_i(t,\varphi) = G_{mux} B \log_2(1 + \varepsilon_i(\varphi)\gamma_i(t,\varphi))$$

$\gamma_i(t, \varphi)$ = estimated received signal-to-noise ratio SNR,
$G_{mux}$ = MIMO spatial multiplexing gain, and
$\varepsilon_i(\varphi)$ = estimation error margin for $\gamma_i(t, \varphi)$.

**11.** The method of one of claims 1 to 10, comprising evaluating the performance of the scheduling for the user on the basis of an average quality and a normalized significance throughput.

**12.** The method of claim 11,
wherein for a user *i* at a distance *d* from a basestation, the average quality and the normalized significance throughput are determined as follows:

$$Q(d) = \sum_{l=0}^{N_L(i)-1} \rho_l (q_l - q_{l-1}) \frac{S_{i,l}(d)}{\mathrm{E}\{N_{\text{bits}}(l,i)\}},$$

$$S_{\text{sig}}(d) = \frac{1}{N_L(i)} \sum_{l=0}^{N_L(i)-1} \rho_l \frac{S_{i,l}(d)}{\mathrm{E}\{N_{\text{bits}}(l,i)\}},$$

$N_L$ = total number of layers in a group of pictures GOP of the user *i*,
$\rho_l$ = zero in case any of the antecedent layers of layer *l* is missing, and one otherwise,
$S_{i,l}(d)$ = number of bits of layer *l* of user *i* transmitted before the delay deadline,
$N_{bits}(l,i)$ = number of bits of layer *l* of user *i*,
$\mathrm{E}\{N_{bits}(l,i)\}$ = statistical mean of $N_{bits}(l,i)$,
$q_l$ = average PSNR if all *l*+1 layers have been received without error, and zero for $l < 1$; and

wherein for a user among the *p*% of users closest to the basestation, the average quality and the normalized significance throughput are determined as follows:

$$\bar{Q}_P(p) = \int_0^{d_{sec}(p)} f_d(d,p) Q(d) \mathrm{d}d,$$

$$Z_{\text{sig}}(p) = \int_0^{d_{sec}(p)} f_d(d,p) S_{\text{sig}}(d) \mathrm{d}d,$$

$d_{sec}(p)$ = radius of the sector centered at the node occupied by *p*% of the users, and
$f_d(p)$ = pdf of the distance d of a single user within the sector defined by $d_{sec}(p)$.

**13.** A computer program product comprising a program code for carrying out the method of one of claims 1 to 12 when being run on a computer.

**14.** A wireless mobile network, comprising:

a plurality of base stations (100); and
a plurality of mobile users ($UE_1$, $UE_2$), wherein a base station (100) serves one or more mobile users ($UE_1$, $UE_2$), wherein one or more of the base stations (100) comprises a scheduler (202) for scheduling a SVC stream to one or more users ($UE_1$, $UE_2$) served by the base station (100) in accordance with the method of one of claims 1 to 13.

**15.** A node (100) for a wireless mobile network, the node (100) comprising:

a scheduler (202) for scheduling a SVC stream to one or more users served by the node in accordance with a method of one of claims 1 to 14.

## Patentansprüche

**1.** Ein Verfahren zum Zuordnen eines Stroms einer skalierbaren Videocodierung (SVC

- scalable video coding) zu einem oder mehreren Nutzern ($UE_1$, $UE_2$) in einem drahtlosen Mobilnetz, wobei das Verfahren folgende Schritte aufweist:

(a) Bestimmen (310, 312, 314) eines Paares aus einem Block physikalischer Ressourcen (PRB - physical resource block) und einem Nutzer, das eine höchste Nützlichkeit unter den verfügbaren PRBs und Nutzern aufweist; und
(b) Zuweisen (316) des PRB des Paares zu dem Nutzer des Paares,

**dadurch gekennzeichnet, dass**
die Nützlichkeit unter Verwendung einer Fuzzylogik-Interferenz bestimmt wird, wobei die Eingabe der Fuzzy-Interferenz eine Signifikanz einer Schicht des für den Nutzer zuzuordnenden SVC-Stroms und eine Übertragungsrate für den Nutzer über den PRB aufweist.

**2.** Das Verfahren gemäß Anspruch 1, bei dem
jeder PRB eine entsprechende nutzerabhängige und zeitlich varüerende Kanalqualität zwischen einem Knoten des drahtlosen Mobilnetzes und dem Nutzer aufweist, die durch die maximale mögliche Übertragungsrate für den Nutzer über den PRB dargestellt wird, und
der SVC-Strom eine Mehrzahl von Schichten aufweist, wobei eine vorausgehende Schicht einen höheren oder niedrigeren Schichtindex aufweist als all ihre abhängigen Schichten, wobei die vorausgehende Schicht vor all ihren abhängigen Schichten an den Nutzer gesandt wird, und wobei die Signifikanz die Wichtigkeit einer an den Nutzer zu sendenden SVC-Schicht auf der Basis des Schichtindex der SVC-Schicht angibt.

**3.** Das Verfahren gemäß Anspruch 1 oder 2, bei dem die Fuzzy-Regeln für die Fuzzylogik-Interferenz Folgende aufweisen:

(1) falls die Signifikanz hoch ist, dann ist die Nützlichkeit hoch,
(2) falls die Signifikanz gering ist, dann ist die Nützlichkeit gering,
(3) falls die Rate hoch ist, dann ist die Nützlichkeit hoch,
(4) falls die Rate niedrig ist, dann ist die Nützlichkeit gering.

**4.** Das Verfahren gemäß einem der Ansprüche 1 bis 3, bei dem die Fuzzylogik-Interferenz eine Sugeno-Fuzzy-Interferenz nullter Ordnung ist, auf deren Basis die Nützlichkeit wie folgt ausgedrückt wird:

$$u_i(t,k,\varphi) \equiv 0.5[\mu_{\mathrm{V}}(v_i(t,k,\varphi),V_{\mathrm{HIGH}})U_{\mathrm{V}}(V_{\mathrm{HIGH}}) + \mu_{\mathrm{R}}(r_i(t,k,\varphi),R_{\mathrm{HIGH}})U_{\mathrm{R}}(R_{\mathrm{HIGH}})]$$

$u_i$ = Nützlichkeit,
$\mu_V$ = Grad der Mitgliedschaft oder Mitgliedschaftsfunktion der Signifikanz mit einem deutlichen Wert,
$\mu_R$ = Grad der Mitgliedschaft oder Mitgliedschaftsfunktion der Rate mit einem deutlichen Wert,
$v_i(t, k, \varphi)$ = Signifikanz einer SVC-Strom-Schicht mit der höchsten Signifikanz, die in einem Zeitschlitz $t$ unter Verwendung eines Teilträgers $k$ des PRB$\varphi$ an den Nutzer gesendet werden soll,
$r_i(t, k, \varphi)$ = erreichbare Bitrate des Nutzers an dem PRB$\varphi$ in dem Zeitschlitz $t$ unter Verwendung des Teilträgers $k$ des PRB$\varphi$,
$V_{HIGH}$ = Satz hoher Signifikanz,

$R_{HIGH}$ = Satz hoher Raten,
$U_V(V_{HIGH}) = \alpha$,
$U_R(R_{HIGH}) = 1 - \alpha$ und
$\alpha$ = Nützlichkeitskoeffizient, der einen Kompromiss zwischen Inhalt und Kanalkenntnis bei einem Zuordnen des SVC-Stroms bestimmt.

**5.** Das Vorfahren gemäß einem der Ansprüche 1 bis 4, bei dem das drahtlose Mobilnetz einen oder mehrere Knoten (100) aufweist, wobei ein Knoten (100) eine Mehrzahl von Nutzern ($UE_1$, $UE_2$) bedient, wobei eine Gruppe von Bildern GOP (group of pictures) des SVC-Stroms während einer Mehrzahl von Zeitschlitzen übertragen wird, wobei jeder Zeitschlitz eine Mehrzahl von PRBs aufweist, wobei jeder ne Mehrzahl von Teilträgern aufweist und wobei das Verfahren für jeden Zeitschlitz und für jeden Teilträger in einem Zeitschlitz die Schritte (a) und (b) wiederholt.

**6.** Das Verfahren gemäß Anspruch 5, bei dem SVC-Strom-Daten, die an die jeweiligen Nutzer ($UE_1$, $UE_2$) gesendet werden sollen, gepuffert werden und das Verfahren folgende Schritte aufweist:

(i) Bestimmen (302), ob etwaige aktive Nutzer vorhanden sind, die durch den Knoten bedient werden, für die SVC-Strom-Daten gepuffert werden,
(ii) falls aktive Nutzer vorhanden sind, Bestimmen (304), ob in dem aktuellen Zeitschlitz etwaige nicht zugewiesene PRBs zur Verfügung stehen,
(iii) falls keine nicht zugewiesenen PRBs zur Verfügung stehen, Übergehen (308) zum nächsten Zeitschlitz,
(iv) falls nicht zugewiesene PRBs zur Verfügung stehen, Bestimmen (310) der Signifikanz einer durch die gepufferten SVC-Strom-Daten dargestellten SVC-Strom-Schicht, und Bestimmen (312), für jeden aktiven Nutzer, der Qualität aller nicht zugewiesenen PRBs in dem aktuellen Zeitschlitz,
(v) für jeden Nutzer, Bestimmen (314, 314a - 314d) der Nützlichkeit aller nicht zugewiesenen PRBs als Fuzzylogik-Funktion der SchichtSignifikanz und der PRB-Qualität, und
(vi) Auswählen (316) des Nutzer/PRB-Paares, das die Nützlichkeit maximiert.

**7.** Das Verfahren gemäß Anspruch 6, das ferner folgende Schritte aufweist:

(vii) Entfernen (318) des ausgewählten PRB aus einer Liste von nicht zugewiesenen PRBs in dem aktuellen Zeitschlitz,
(viii) Aktualisieren (320) eines Puffers ($200_1$ - $200_i$) des ausgewählten Nutzers, und
(ix) Wiederholten der Schritte (i) bis (viii).

**8.** Das Verfahren gemäß Anspruch 6 oder 7, bei dem im Schritt (iii) der nächste Zeitschlitz zum aktuellen Zeitschlitz wird und das Verfahren zu Schritt (ii) zurückkehrt.

**9.** Das Verfahren gemäß einem der Ansprüche 1 bis 7, bei dem die Signifikanz einer Schicht / des SVC-Stroms wie folgt bestimmt wird:

$$v(l) = 1 - \frac{1}{N_L}$$

$N_L$ = Gesamtanzahl von Schichten in einer einzigen Gruppe von Bildern GOP des Nutzers.

**10.** Das Verfahren gemäß einem der Ansprüche 1 bis 8, bei dem die Übertragungsrate für den Nutzer *i* über den PRB$\varphi$ zu einem Zeitpunkt *t* wie folgt bestimmt wird:

$$r_i(t,\varphi) = G_{mux} B \log_2(1 + \varepsilon_i(\varphi)\gamma_i(t,\varphi))$$

$\gamma_i(t, \varphi)$ = geschätztes empfangenes Signal/Rausch-Verhältnis SNR (signal-to-noise ratio)

$G_{mux}$ = Gewinn durch räumliches MIMO-Multiplexen und
$\varepsilon_i(\varphi)$ = Schätzfehlerspielraum für $\gamma_i(t, \varphi)$.

**11.** Das Verfahren gemäß einem der Ansprüche 1 bis 10, das ein Auswerten des Verhaltens des Zuordnens für den Nutzer auf der Basis einer durchschnittlichen Qualität und eines normierten Signifikanzdurchsatzes aufweist.

**12.** Das Verfahren gemäß Anspruch 11,
bei dem die durchschnittliche Qualität und der normierte Signifikanzdurchsatz für einen Nutzer *i* in einem Abstand d von einer Basisstation wie folgt bestimmt werden:

$$Q(d) = \sum_{l=0}^{N_L(i)-1} \rho_l (q_l - q_{l-1}) \frac{S_{i,l}(d)}{\mathrm{E}\{N_{\mathrm{bits}}(l,i)\}},$$

$$S_{\mathrm{sig}}(d) = \frac{1}{N_L(i)} \sum_{l=0}^{N_L(i)-1} \rho_l \frac{S_{i,l}(d)}{\mathrm{E}\{N_{\mathrm{bits}}(l,i)\}},$$

$N_L$ = Gesamtanzahl von Schichten in einer Gruppe von Bildern GOP des Nutzers *i,*
$\rho_l$ = null in dem Fall, dass eine der vorausgehenden Schichten der Schicht *l* fehlt, und anderenfalls eins,
$S_{i,l}(d)$ = Anzahl von Bits der Schicht *l* des Nutzers *i*, die vor dem Verzögerungsende gesendet werden,
$N_{bits}(l,i)$ = Anzahl von Bits der Schicht *l* des Nutzers *i,*
$E\{N_{bits}(l,i)\}$ = statistischer Mittelwert von $N_{bits}(l,i)$,
$q_l$ = mittleres PSNR, falls alle $l$+1 Schichten ohne Fehler empfangen wurden, und null für $l$ < 1; und

wobei für einen Nutzer unter den *p*% von Nutzern, die sich am nächsten bei der Basisstation befinden, die durchschnittliche Qualität und der normierte Signifikanzdurchsatz wie folgt bestimmt werden:

$$Q_P(p) = \int_0^{d_{\mathrm{sec}}(p)} f_d(d,p) Q(d) \mathrm{d}d,$$

$$Z_{\mathrm{sig}}(p) = \int_0^{d_{\mathrm{sec}}(p)} f_d(d,p) S_{\mathrm{sig}}(d) \mathrm{d}d,$$

$d_{sec}(p)$ = Radius des Sektors, der an dem Knoten zentriert ist, der durch *p%* der Nutzer besetz ist, und
$f_d$(p) = pdf der Entferning *d* eines einzelnen Nutzers in dem durch $d_{sec}(p)$ definierten Sektor.

**13.** Ein Computerprogrammprodukt, das einen Programmcode zum Durchführen des Verfahrens eines der Ansprüche 1 bis 12 aufweist, wenn es auf einem Computer abläuft.

**14.** Drahtloses Mobilnetz, das folgende Merkmale aufweist:

eine Mehrzahl von Basisstationen (100); und
eine Mehrzahl von Mobilnutzern ($UE_1$, $UE_2$), wobei eine Basisstation (100) einem oder mehreren Mobilnutzern ($UE_1$, $UE_2$) bedient,
wobei eine oder mehrere der Basisstationen (100) einen Zuordner (202) zum Zuordnen eines SVC-Stroms zu einem oder mehreren Nutzern ($UE_1$, $UE_2$), der beziehungsweise die durch die Basisstation (100) bedient wird beziehungsweise werden, gemäß dem Verfahren eines der Ansprüche 1 bis 13 aufweist.

**15.** Ein Knoten (100) für ein drahtloses Mobilnetz, wobei der Knoten (100) folgendes Merkmal aufweist:

einen Zuordner (202) zum Zuordnen eines SVC-Stroms zu einem oder mehreren Nutzern r, der beziehungsweise die durch den Knoten bedient wird beziehungsweise werden, gemäß einem Verfahren eines der Ansprüche 1 bis 14.

## Revendications

**1.** Procédé de planification d'un flux SVC de codage vidéo extensible vers un ou plusieurs utilisateurs ($UE_1$, $UE_2$) dans un réseau mobile sans fil, le procédé comprenant le fait de:

(a) déterminer (310, 312, 314) une paire consistant en un bloc de ressources physiques PRB et un utilisateur, la paire présentant une utilité la plus élevée parmi les PRB et les utilisateurs disponibles; et
(b) attribuer (316) le PRB de la paire à l'utilisateur de la paire,

**caractérisé par le fait que**
l'utilité est déterminée à l'aide d'une inférence logique floue, l'entrée de l'inférence floue comprenant une signification d'une couche du flux SVC à planifier vers l'utilisateur et une vitesse de transmission pour l'utilisateur via le PRB.

**2.** Procédé selon la revendication 1, dans lequel
chaque PRB comprend une qualité de canal correspondante fonction de l'utilisateur et variable dans le temps entre un noeud du réseau mobile sans fil et l'utilisateur qui est représentée par la vitesse de transmission maximale possible pour l'utilisateur via le PRB, et
le flux SVC comprend une pluralité de couches, une couche antécédente présentant un indice de couche supérieur ou inférieur à l'une quelconque de ses couches dépendantes, la couche antécédente étant envoyée à l'utilisateur avant l'une quelconque de ses couches dépendantes, et la signification indiquant l'importance d'une couche SVC à envoyer à l'utilisateur sur base de l'indice de couche de la couche SVC.

**3.** Procédé selon la revendication 1 ou 2, dans lequel les règles floues pour l'inférence de logique floue comprennent:

(1) si la signification est élevée, l'utilité est grande,
(2) si la signification est faible, l'utilité est faible,
(3) si la vitesse est grande, l'utilité est grande,
(4) si la vitesse est faible, l'utilité est faible.

**4.** Procédé selon l'une des revendications 1 à 3, dans lequel l'inférence de logique floue est une inférence floue de Sugeno d'ordre zéro sur base de laquelle l'utilité est exprimée comme suit:

$$u_i(t,k,\varphi) \equiv 0.5[\mu_V(v_i(t,k,\varphi),V_{HIGH})U_V(V_{HIGH}) + \mu_R(r_i(t,k,\varphi),R_{HIGH})U_R(R_{HIGH})]$$

$u_i$ = utilité,
$\mu_V$ = degré de membre ou fonction de membre de signification avec une valeur nette,
$\mu_R$ = degré de membre ou fonction de membre de vitesse avec une valeur nette,
$v_i(t, k, \varphi)$ = signification d'une couche de flux SVC présentant la signification la plus élevée à envoyer à l'utilisateur dans un intervalle de temps $t$ à l'aide d'une sous-porteuse $\kappa$ du PRBφ,
$r_i(t, k, \varphi)$ = vitesse binaire de l'utilisateur pouvant être atteinte sur le PRBφ dans l'intervalle de temps $t$ à l'aide de la sous-porteuse $k$ de PRBφ,
$V_{HIGH}$ = ensemble de haute signification,
$R_{HIGH}$ = ensemble de grande vitesse,
$U_V(V_{HIGH}) = \alpha$,
$U_R(R_{HIGH}) = 1 - \alpha$, et
α = coefficient d'utilité déterminant un compromis entre le contenu et la conscience de canal après planification du flux SVC.

**5.** Procédé selon l'une des revendications 1 à 4, dans lequel le réseau mobile sans fil comprend un ou plusieurs noeuds (100), un noeud (100) desservant une pluralité d'utilisateurs ($UE_1$, $UE_2$), dans lequel un groupe d'images GOP du flux SVC est transmis pendant une pluralité d'intervalles de temps, chaque intervalle de temps comprenant une pluralité de PRB, chaque PRB comprenant une pluralité de sous-porteuses, et dans lequel le procédé répète les étapes (a) et (b) pour chaque intervalle de temps et pour chaque sous-porteuse dans un intervalle de temps.

**6.** Procédé selon la revendication 5, dans lequel les données de flux SVC à envoyer aux utilisateurs respectifs ($UE_1$, $UE_2$) sont mises en mémoire tampon, et le procédé comprenant le fait de:

(i) déterminer (302) pour un intervalle de temps actuel s'il y a des utilisateurs actifs desservis par le noeud pour lesquels des données de flux SVC sont mises en mémoire tampon,
(ii) s'il y a des utilisateurs actifs, déterminer (304) s'il y a des PRB non attribués disponibles dans l'intervalle de temps actuel,
(iii) s'il n'y a pas de PRB non attribués disponibles, aller (308) à l'intervalle de temps suivant,
(iv) s'il y a des PRB non attribués disponibles, déterminer (310) la signification d'une couche de flux SVC représentée par les données de flux SVC mises en mémoire tampon, et déterminer (312), pour chaque utilisateur actif, la qualité de tous les PRB non attribués dans l'intervalle de temps actuel,
(v) pour chaque utilisateur, déterminer (314, 314a à 314d) l'utilité de tous les PRB non attribués comme fonction de logique floue de la signification de couche et de la qualité de PRB, et
(vi) sélectionner (316) la paire PRB / utilisateur qui maximise l'utilité.

**7.** Procédé selon la revendication 6, comprenant par ailleurs le fait de:

(vii) éliminer (318) le PRB choisi d'une liste de PRB non attribués dans l'intervalle de temps actuel,
(viii) mettre à jour (320) une mémoire tampon ($200_1$ à $200_i$) de l'utilisateur sélectionné, et
(ix) répéter les étapes (i) à (viii).

**8.** Procédé selon la revendication 6 ou 7, dans lequel, à l'étape (iii), l'intervalle de temps suivant devient l'intervalle de temps actuel et le procédé retourne à l'étape (ii).

**9.** Procédé selon l'une des revendications 1 à 7, dans lequel la signification d'une couche *l* du flux SVC est déterminée comme suit:

$$v(l) = 1 - \frac{1}{N_L}$$

$N_L$ = nombre total de couches dans un seul groupe d'images GOP de l'utilisateur.

**10.** Procédé selon l'une des revendications 1 à 8, dans lequel la vitesse de transmission pour l'utilisateur *i* sur le PRBφ à un moment *t* est déterminée comme suit:

$$r_i(t,\varphi) = G_{\text{mux}} B \log_2(1 + \varepsilon_i(\varphi)\gamma_i(t,\varphi))$$

$\gamma_i(t, \varphi)$ = rapport signal-bruit SNR reçu estimé,
$G_{mux}$ = gain de multiplexage spatial MIMO, et
$\varepsilon_i(\varphi)$ = marge d'erreur d'estimation pour $\gamma_i(t, \varphi)$.

**11.** Procédé selon l'une des revendications 1 à 10, comprenant le fait d'évaluer la performance de la planification pour l'utilisateur sur base d'une qualité moyenne et d'un débit de signification normalisé.

**12.** Procédé selon la revendication 11,

dans lequel, pour un utilisateur *i* à une distance *d* d'une station de base, la qualité moyenne et le débit de signification normalisé sont déterminés comme suit:

$$Q(d) = \sum_{l=0}^{N_L(i)-1} \rho_l (q_l - q_{l-1}) \frac{S_{i,l}(d)}{E\{N_{bits}(l,i)\}},$$

$$S_{sig}(d) = \frac{1}{N_L(i)} \sum_{l=0}^{N_L(i)-1} \rho_l \frac{S_{i,l}(d)}{E\{N_{bits}(l,i)\}},$$

$N_L$ = nombre total de couches dans un groupe d'images GOP de l'utilisateur *i*,
$\rho_l$ = zéro au cas où l'une ou l'autre des couches antérieures de la couche *l* est absente, et autrement un,
$S_{i,l}(d)$ = nombre de bits de la couche *l* de l'utilisateur *i* transmis avant la limite de retard,
$N_{bits}(l, i)$ = nombre de bits de la couche *l* de l'utilisateur *i,*
$E\{N_{bits}(l,i)\}$ = moyenne statistique de $N_{bits}(l,i)$,
$q_l$ = PSNR moyen si les *l*+1 couches ont été reçues sans erreur, et zéro pour *l*<1; et

dans lequel pour un utilisateur parmi le *p*% d'utilisateurs les plus rapprochés de la station de base, la qualité moyenne et le débit de signification normalisé sont déterminés comme suit:

$$Q_p(p) = \int_0^{d_{sec}(p)} f_d(d,p) Q(d) dd,$$

$$Z_{sig}(p) = \int_0^{d_{sec}(p)} f_d(d,p) S_{sig}(d) dd,$$

$d_{sec}(p)$ = rayon du secteur centré au noeud occupé par *p*% des utilisateurs, et
$f_d(p)$ = pdf de la distance *d* d'un utilisateur unique à l'intérieur du secteur défini par $d_{sec}(p)$.

**13.** Programme d'ordinateur comprenant un code de programme pour réaliser le procédé selon l'une des revendications 1 à 12 lorsqu'il est exécuté sur un ordinateur.

**14.** Réseau mobile sans fil, comprenant:

une pluralité de stations de base (100); et
une pluralité d'utilisateurs mobiles ($UE_1$, $UE_2$), où une station de base (100) dessert un ou plusieurs utilisateurs mobiles ($UE_1$, $UE_2$),
dans lequel une ou plusieurs des stations de base (100) comprend un planificateur (202) destiné à planifier un flux SVC vers un ou plusieurs utilisateurs ($UE_1$, $UE_2$) desservis par la station de base (100) selon le procédé selon l'une des revendications 1 à 13.

**15.** Noeud (100) pour un réseau mobile sans fil, le noeud (100) comprenant:

un planificateur (202) destiné à planifier un flux SVC vers un ou plusieurs utilisateurs qui sont desservis par le noeud selon un procédé selon l'une des revendications 1 à 14.

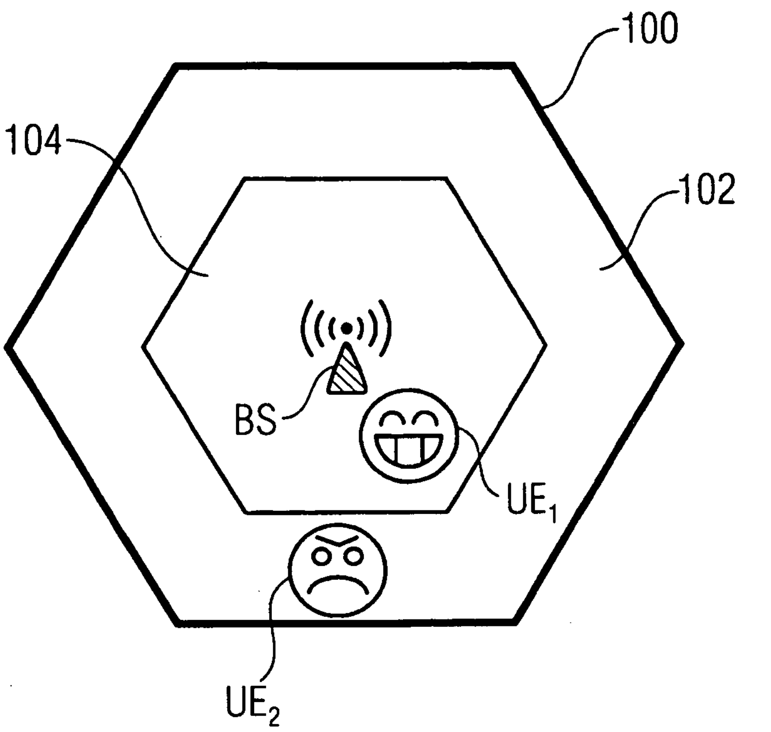


FIG 1A

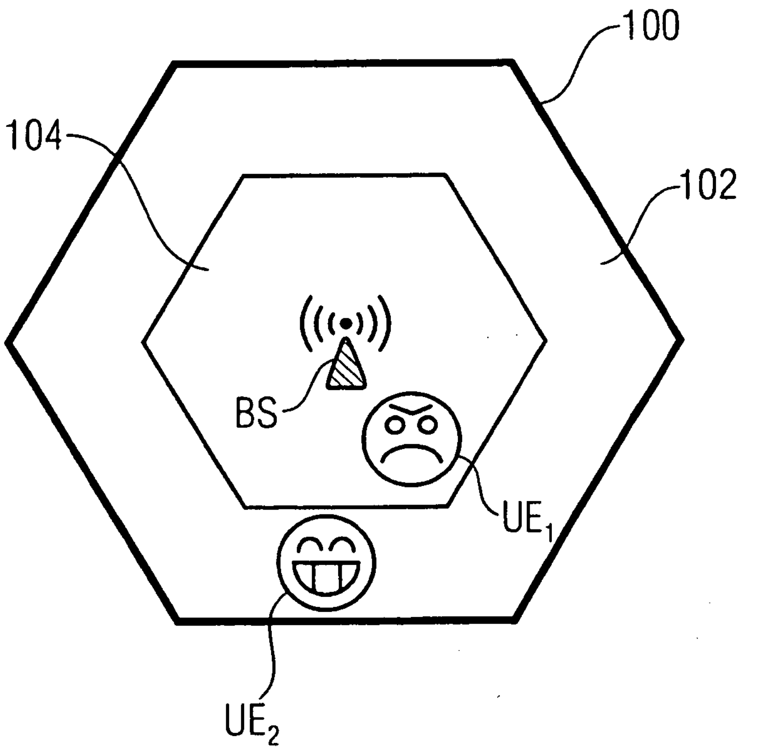


FIG 1B

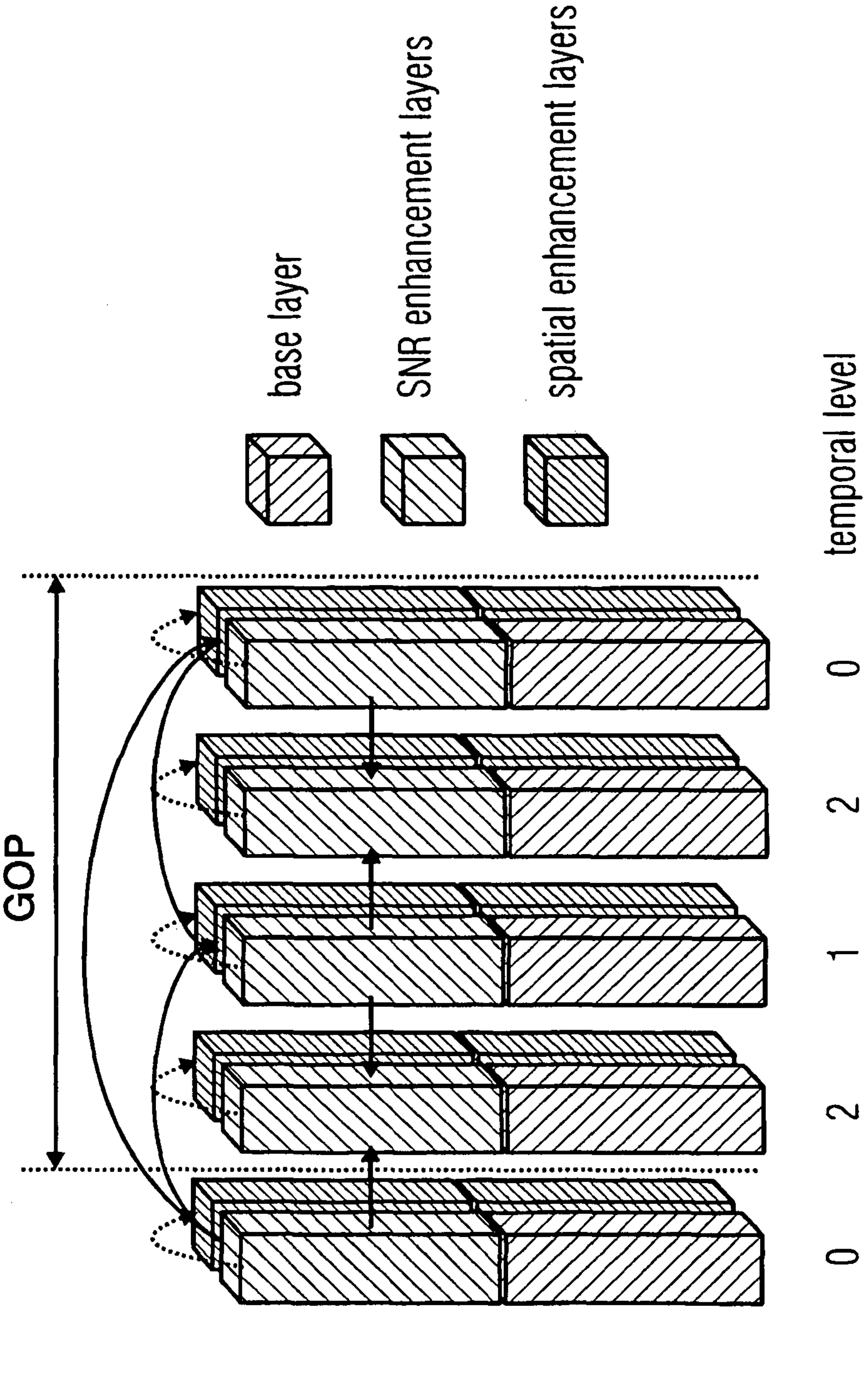
GOP
base layer
SNR enhancement layers
spatial enhancement layers
temporal level
0
2
1
2
0

FIG 2

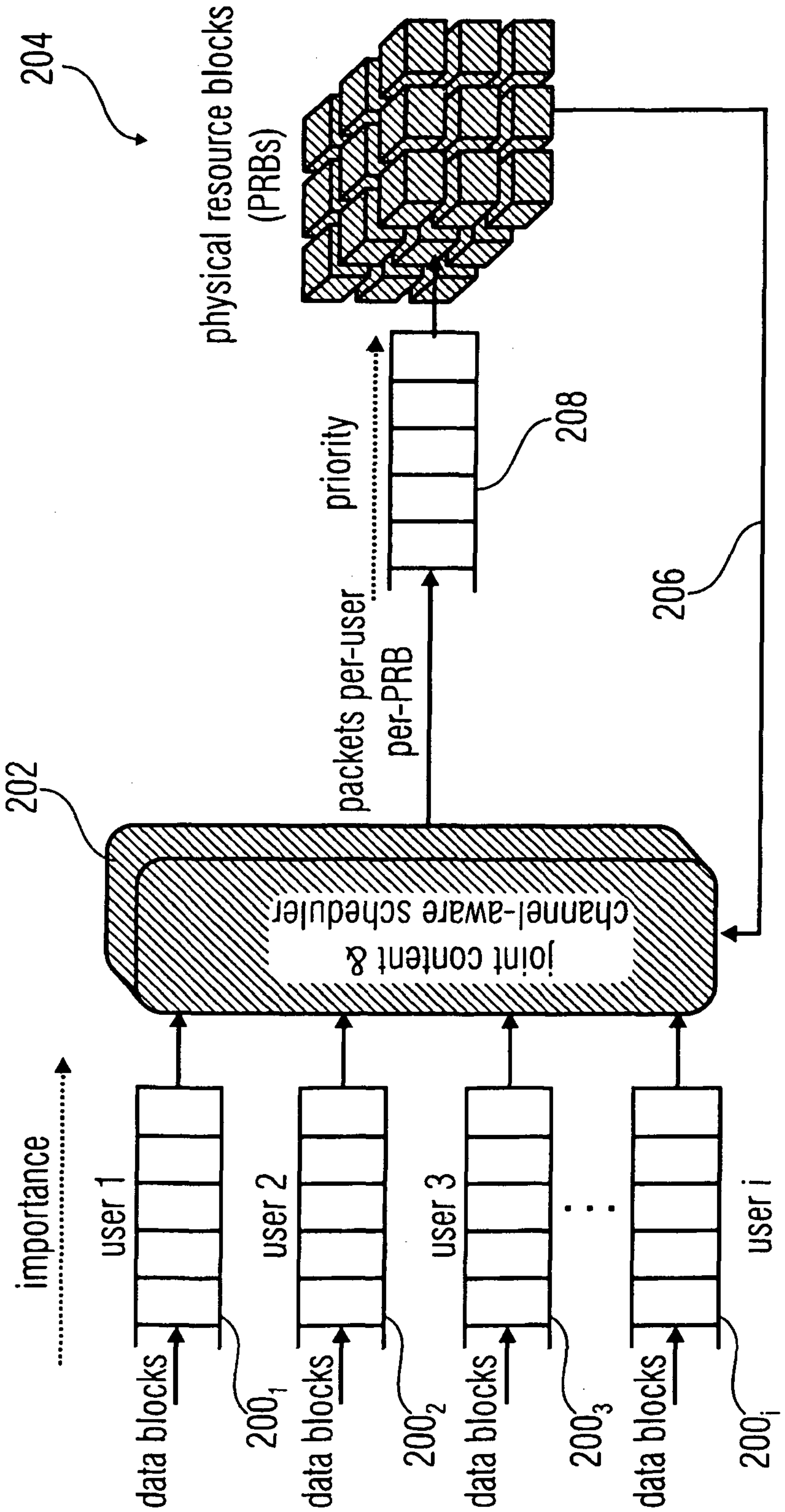
204
physical resource blocks (PRBs)
208
priority
206
packets per-user per-PRB
202
joint content & channel-aware scheduler
importance
user 1
user 2
user 3
user i
data blocks
data blocks
data blocks
data blocks
$200_1$
$200_2$
$200_3$
$200_i$

FIG 3

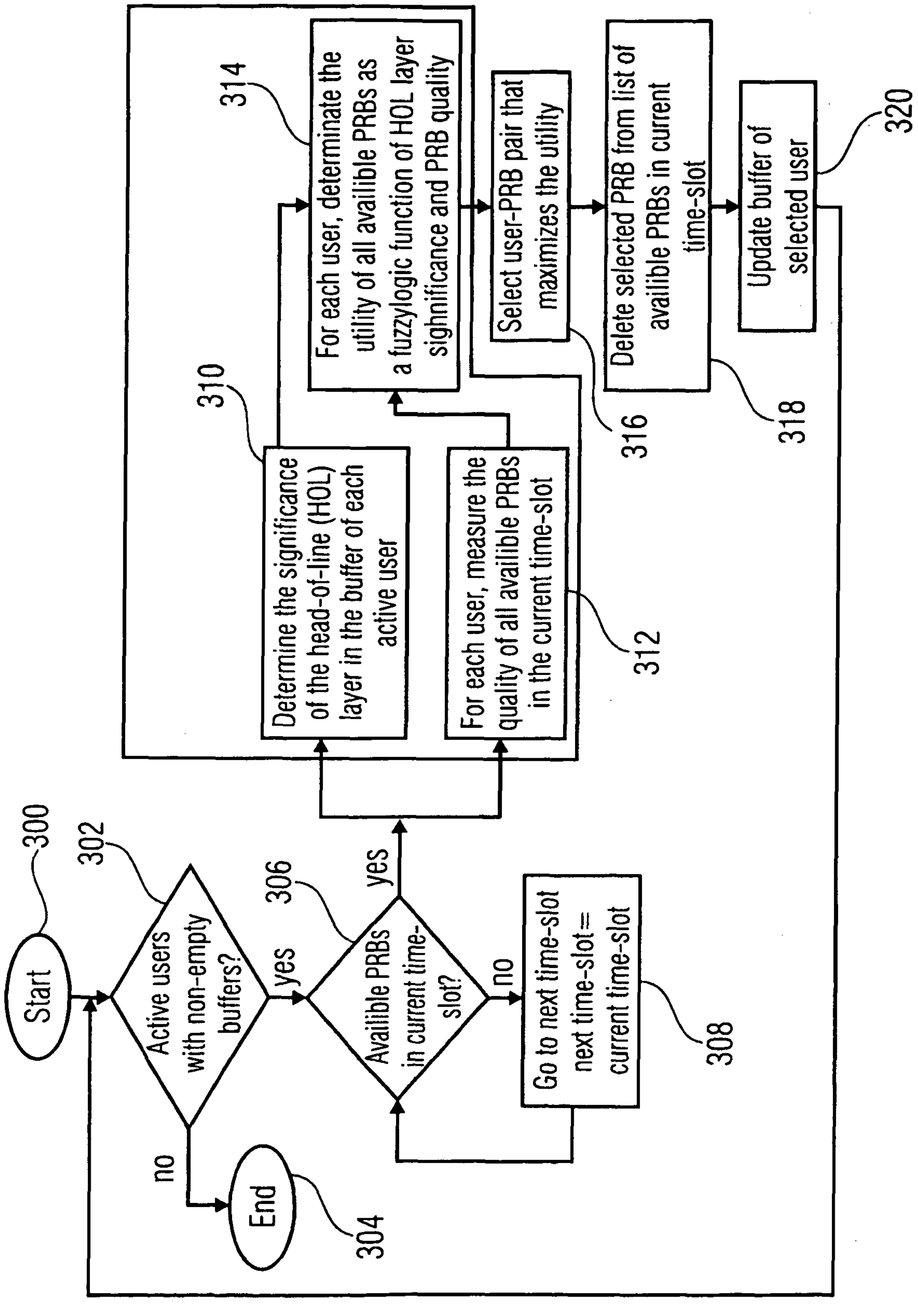
Start
300
Active users with non-empty buffers?
302
no
yes
End
304
Availible PRBs in current time-slot?
306
yes
no
Go to next time-slot next time-slot= current time-slot
308
Determine the significance of the head-of-line (HOL) layer in the buffer of each active user
310
For each user, measure the quality of all availible PRBs in the current time-slot
312
For each user, determinate the utility of all availible PRBs as a fuzzylogic function of HOL layer signhificance and PRB quality
314
Select user-PRB pair that maximizes the utility
316
Delete selected PRB from list of availible PRBs in current time-slot
318
Update buffer of selected user
320

FIG 4

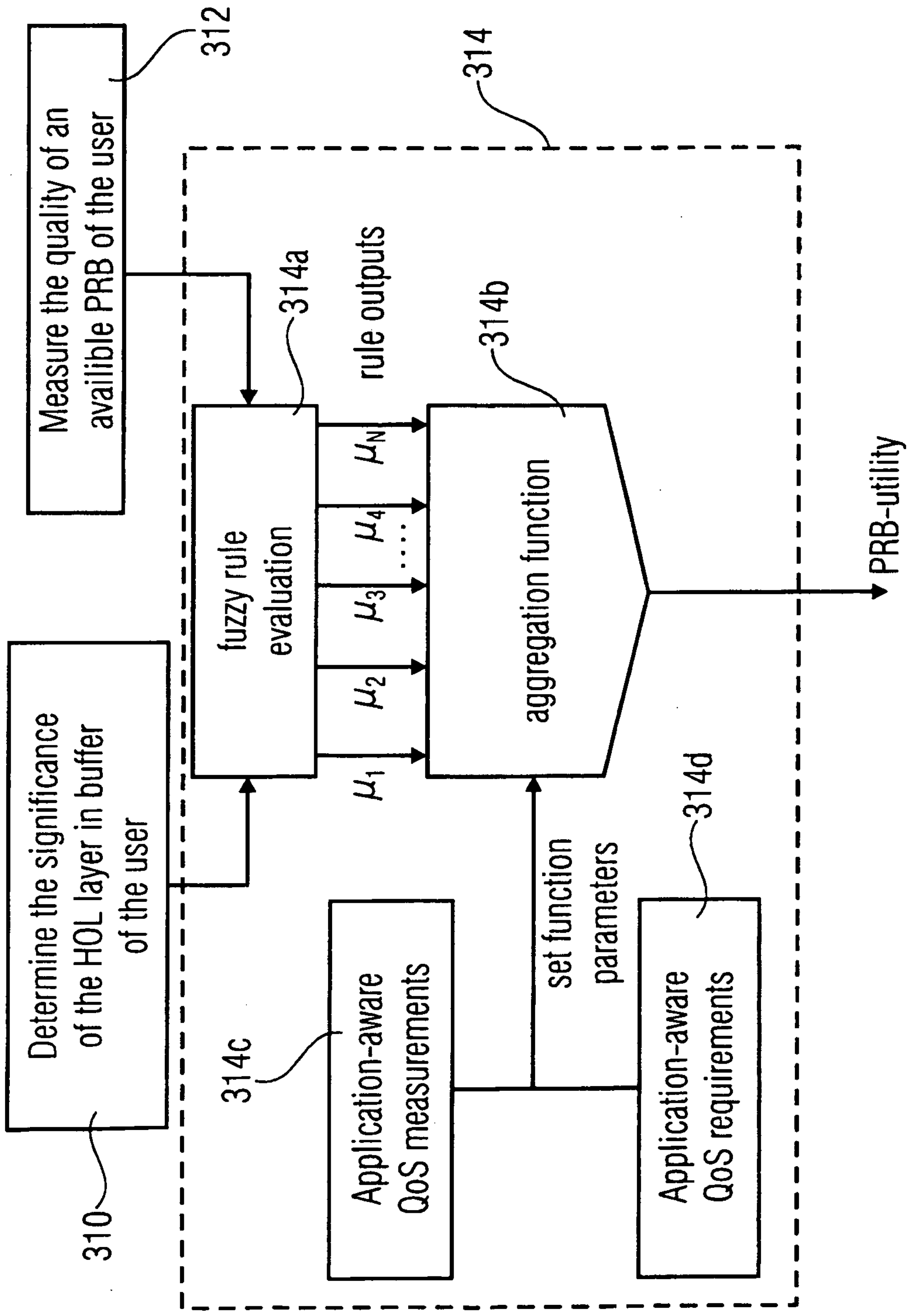
Measure the quality of an availible PRB of the user
312
314
314a
rule outputs
314b
fuzzy rule evaluation
$\mu_N$
$\mu_4$
$\mu_3$
$\mu_2$
$\mu_1$
aggregation function
PRB-utility
Determine the significance of the HOL layer in buffer of the user
set function parameters
314d
314c
Application-aware QoS measurements
Application-aware QoS requirements
310

FIG 5

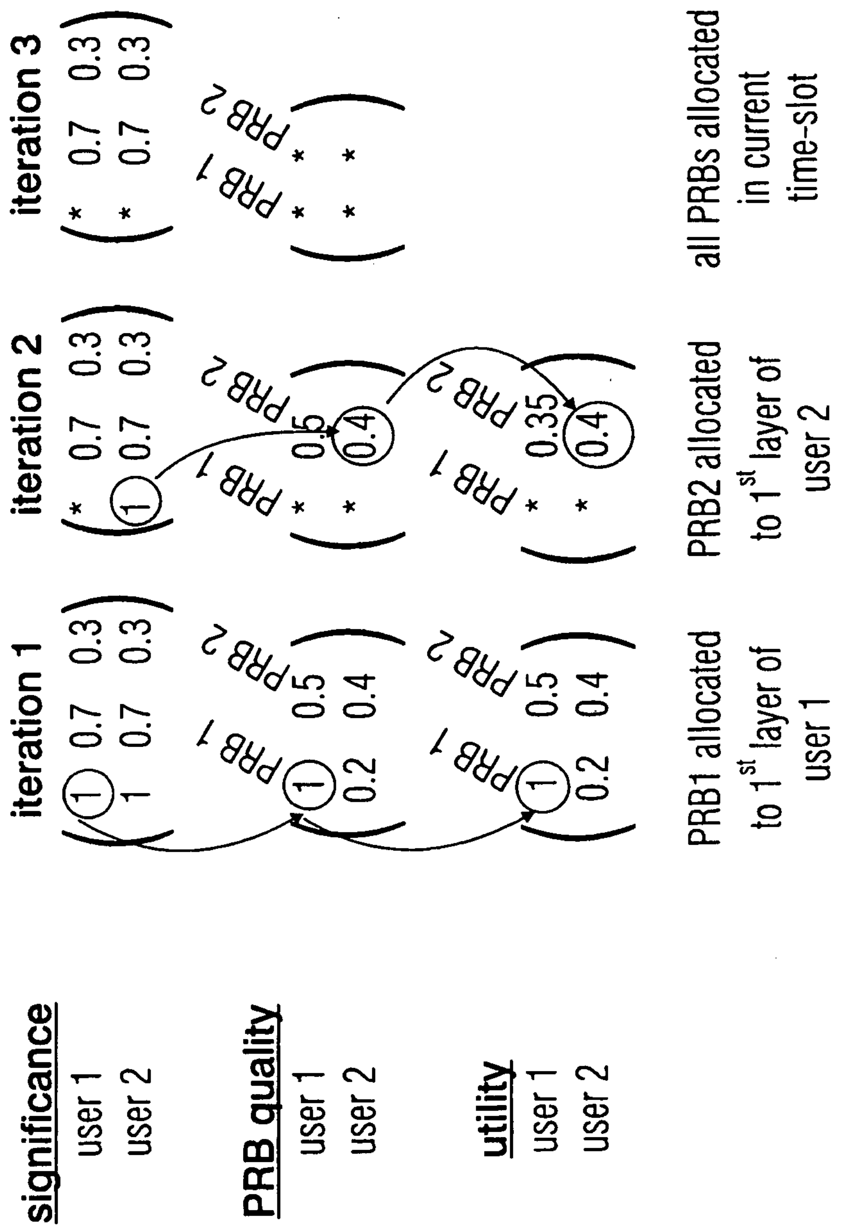
significance
user 1
user 2
PRB quality
user 1
user 2
utility
user 1
user 2
iteration 1
iteration 2
iteration 3
PRB 1
PRB 2
PRB1 allocated to 1st layer of user 1
PRB2 allocated to 1st layer of user 2
all PRBs allocated in current time-slot

FIG 6A

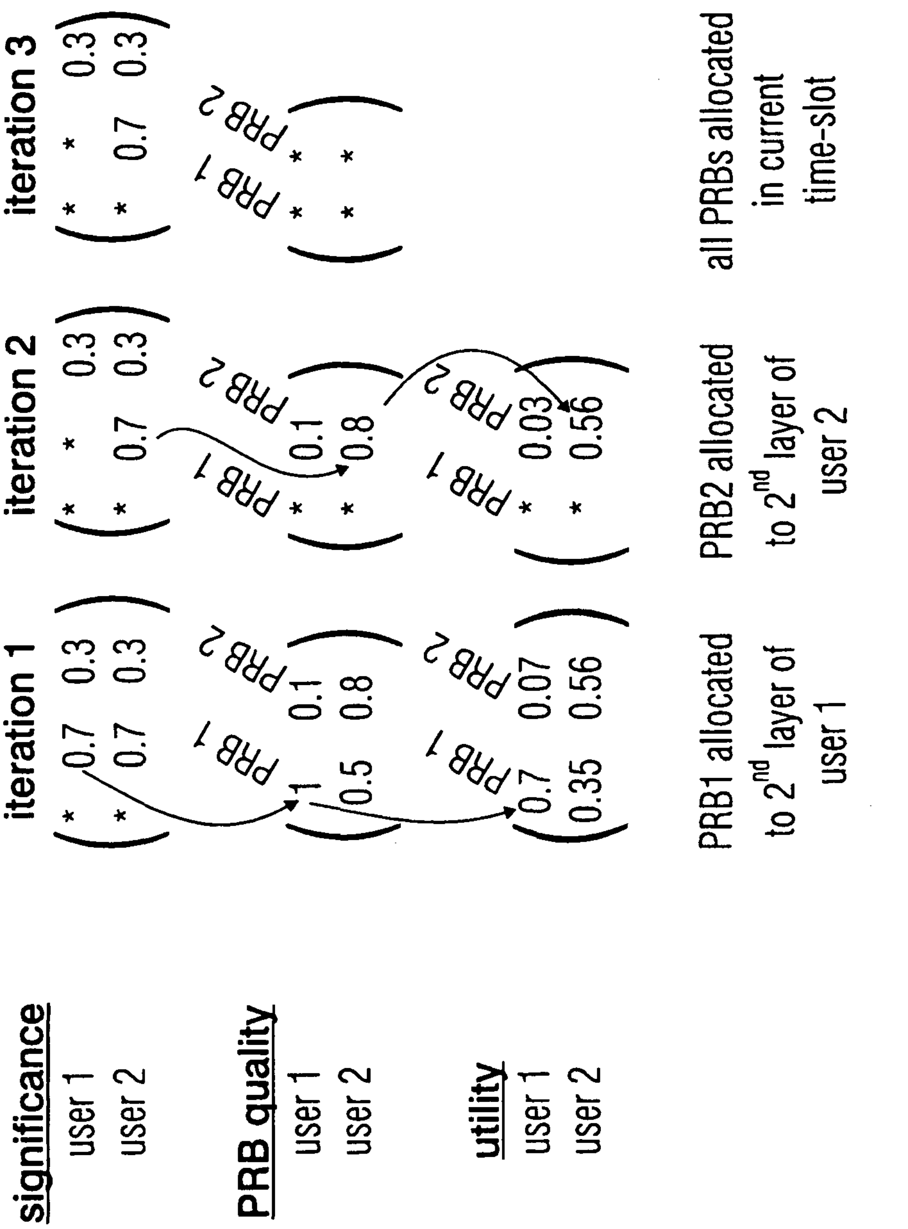
significance
user 1
user 2
PRB quality
user 1
user 2
utility
user 1
user 2
iteration 1
iteration 2
iteration 3
PRB 1
PRB 2
PRB1 allocated to 2nd layer of user 1
PRB2 allocated to 2nd layer of user 2
all PRBs allocated in current time-slot

FIG 6B

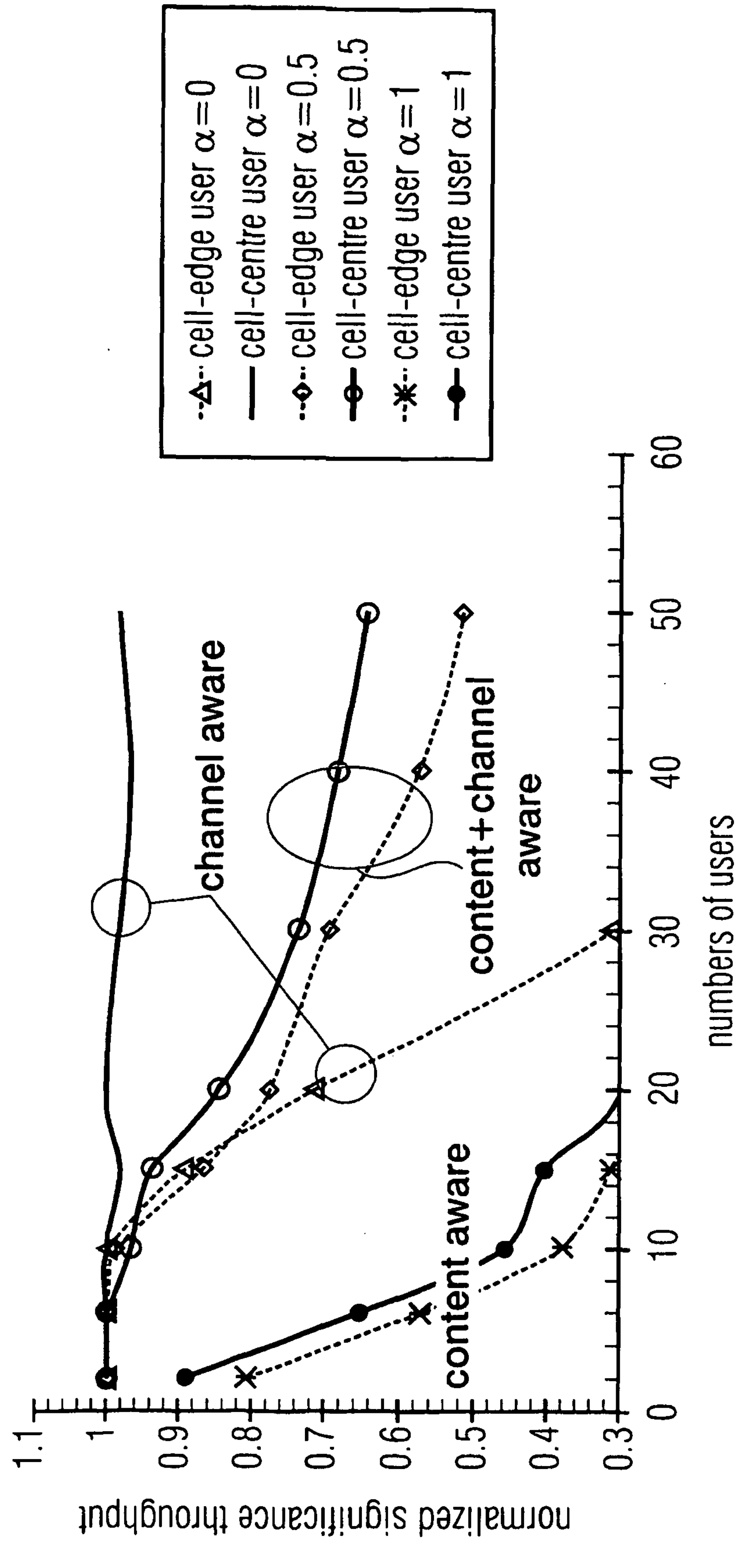
cell-edge user α=0
cell-centre user α=0
cell-edge user α=0.5
cell-centre user α=0.5
cell-edge user α=1
cell-centre user α=1
channel aware
content+channel aware
content aware
normalized significance throughput
numbers of users
1.1
1
0.9
0.8
0.7
0.6
0.5
0.4
0.3
0
10
20
30
40
50
60

FIG 6C

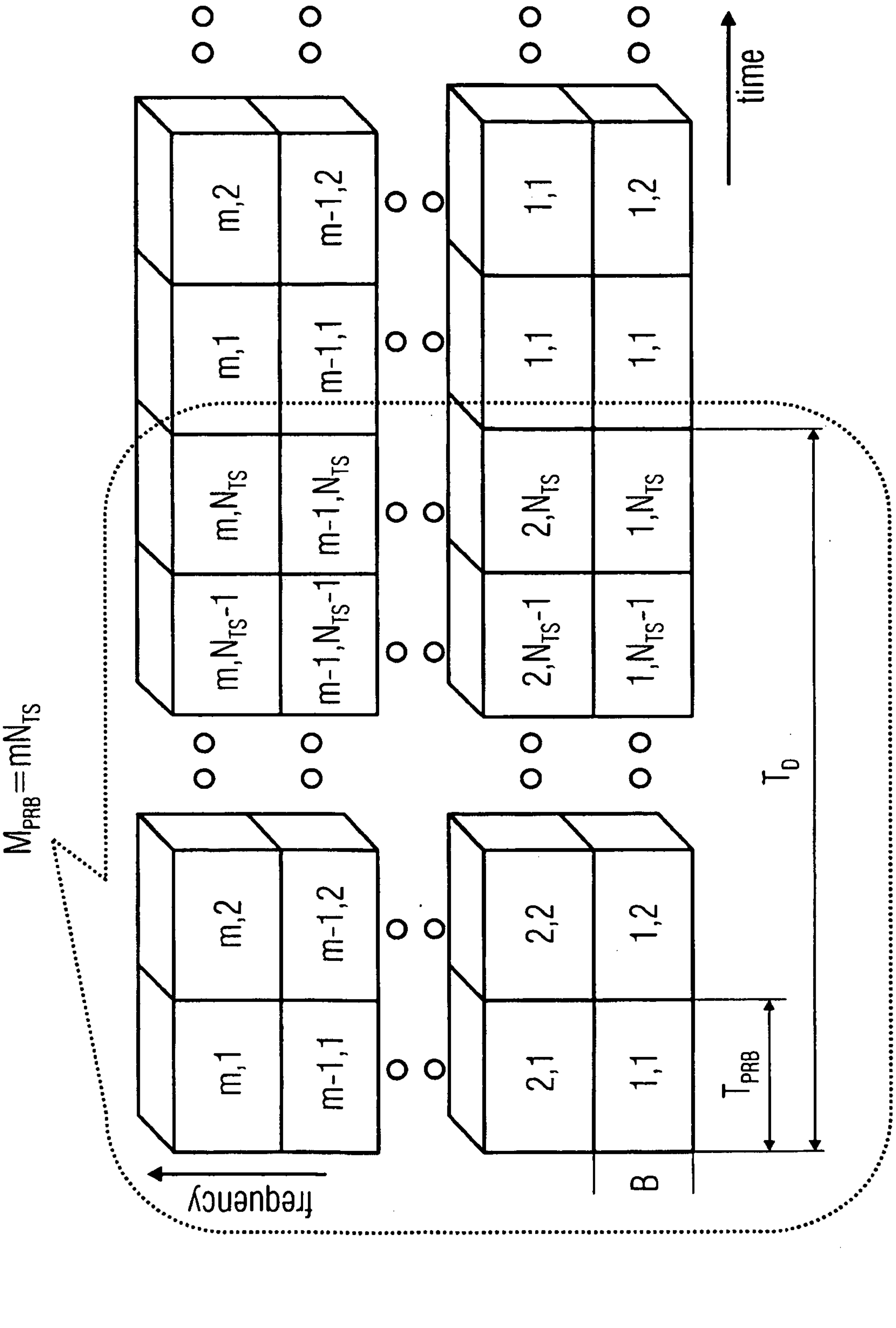

$M_{PRB} = mN_{TS}$
frequency
time
m,1
m,2
m-1,1
m-1,2
2,1
2,2
1,1
1,2
m,$N_{TS}$-1
m,$N_{TS}$
m-1,$N_{TS}$-1
m-1,$N_{TS}$
2,$N_{TS}$-1
2,$N_{TS}$
1,$N_{TS}$-1
1,$N_{TS}$
B
$T_{PRB}$
$T_D$


FIG 7

## table of symbols

| | |
|---|---|
| $\Phi_{ARB}(t, k)$, $\Phi_{URB}(t, k)$, $\varphi$ | Set of allocated and unallocated PRBs, respectively, by iteration k of time slot t, and PRB index |
| $Q(d)$, $S_{sig}(d)$, $S_{bit}(d)$. | Average quality, Normalized significance throughput and Bit throughput, respectively, for a user at distance d from the BS |
| $Q_P(p)$, $Z_{sig}(p)$ and $Z_{bit}(p)$ | Average quality, Normalized significance throughput and Bit throughput, respectively, of a user among the p% of users closest to the BS |
| $n_{TL}$ | Number of temporal layers |
| $N_L$, $N_L(i)$ | Number of layers (for user i) |
| $q_i$ | Average quality if all l + 1 layers have been received without error |
| $S_{i,l}(d)$ | Number of bits of layer l of user i that are transmitted before the delay constraint. |
| $v_{i,l}$ | Significance of layer l of user i |
| $r_i(t,\varphi)$ | Maximum possible transmission rate (bits/s) for user i over PRB $\varphi$ at time t. |
| $r_{max}$ | Maximum rate in bits/s over any single PRB with the highest order modulation and zero coding overhead |
| $R_i(d)$, $f_R(r, d)$ | Average rate per PRB $R_i(d)$ and its pdf as a function of the the user's distance d from the BS |
| $u_{i,l}$, $u_{i,l}(d)$ | Utility of user i (at a distance d) when sending bits of layer l. |
| $f_u(l,i,d)$ | The pdf of $u_{i,l}(d)$ |
| $d_{rad}$, $A_{sec}$ | Radius and area of cell sector |

| FIG 8 | FIG 8A |
|---|---|
| | FIG 8B |

FIG 8A

| | |
|---|---|
| $d_{sec}(p)$ | Radius of a sector centered at the BS occupied by p% of the users |
| $f_d(d,p)$ | The pdf of the distance d of a single user within the sector defined by radius $d_{sec}(p)$. |
| $T_{PRB}$ | The time duration of a single PRB or time-slot |
| $R_{frame}$, $N_{frame}$ | Frame rate and number of frames in a GOP |
| $N_{TS}$, $M_{PRB}$, $T_D$ | Maximum number of time-slots, maximum number of PRBs and maximum delay constraint or duration, respectively, to send all layers of a GOP |
| g | number of GOPs sent in $T_D$ |
| m, M | Number of PRBs per time-slot for the tagged sector and for the 3 sectors of a cluster, respectively |
| i, l | Indices of the tagged user and tagged layer, respectively. |
| $\hat{i}$, $\hat{l}$ | Indices of a competing user and layer, respectively. |
| $\gamma_i(d)$ | Mean SNR of a user at distance d from the BS. |
| $\alpha$ | Utility coefficient |
| $N_{PRB}(l, i, d)$, $P_{PRB}(k, l, i, d)$ | Number of PRBs required to send layer l of user i, and its probability mass function, respectively |
| $S_{PRB}(l, i, d)$ | PRBs required to send the layers of the competing users that have a higher utility than the tagged user and the layers of the tagged user up to layer l |
| $N_{bits}(l, i)$, $P_{LB}(k, l, i)$ | Number of bits of layer l of user i and its probability mass function, respectively |
| N | Number of users |
| $e_{fade}$, $f_{fade}(e)$ | Shadow fading random variable and its pdf, respectively. |

| FIG 8 | FIG 8A |
|---|---|
| | FIG 8B |

FIG 8B

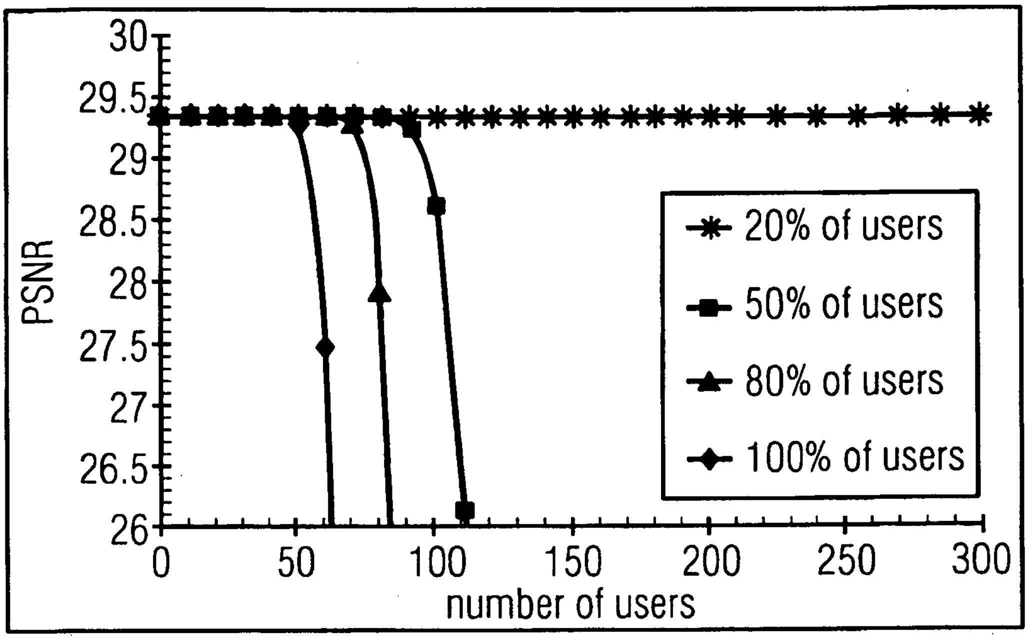
30
29.5
29
28.5
28
27.5
27
26.5
26
PSNR
0
50
100
150
200
250
300
number of users
20% of users
50% of users
80% of users
100% of users

FIG 9

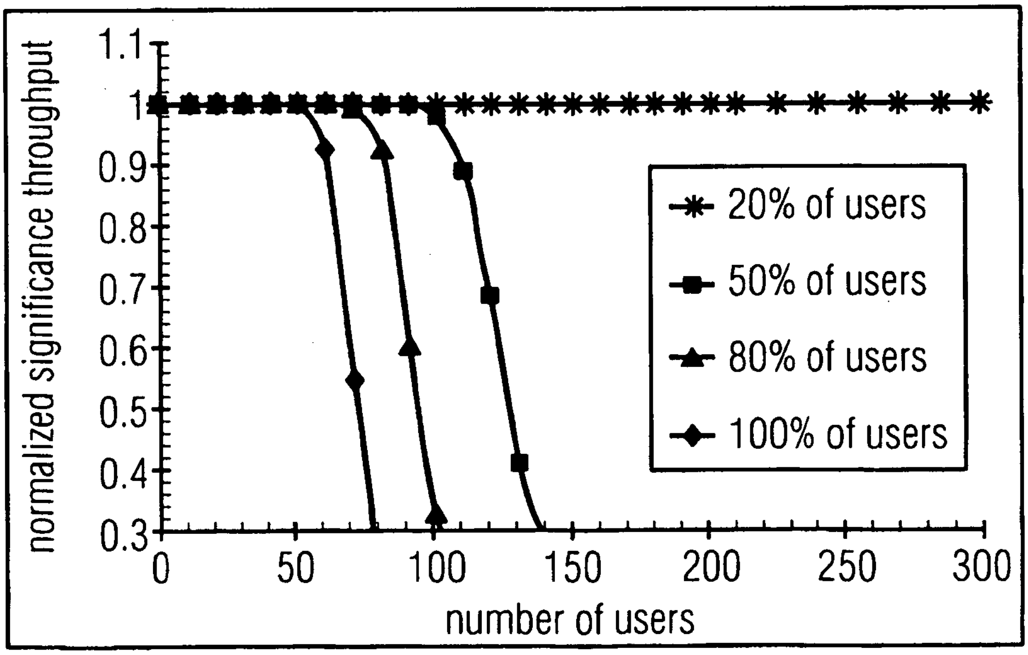
1.1
1
0.9
0.8
0.7
0.6
0.5
0.4
0.3
normalized significance throughput
0
50
100
150
200
250
300
number of users
20% of users
50% of users
80% of users
100% of users

FIG 10

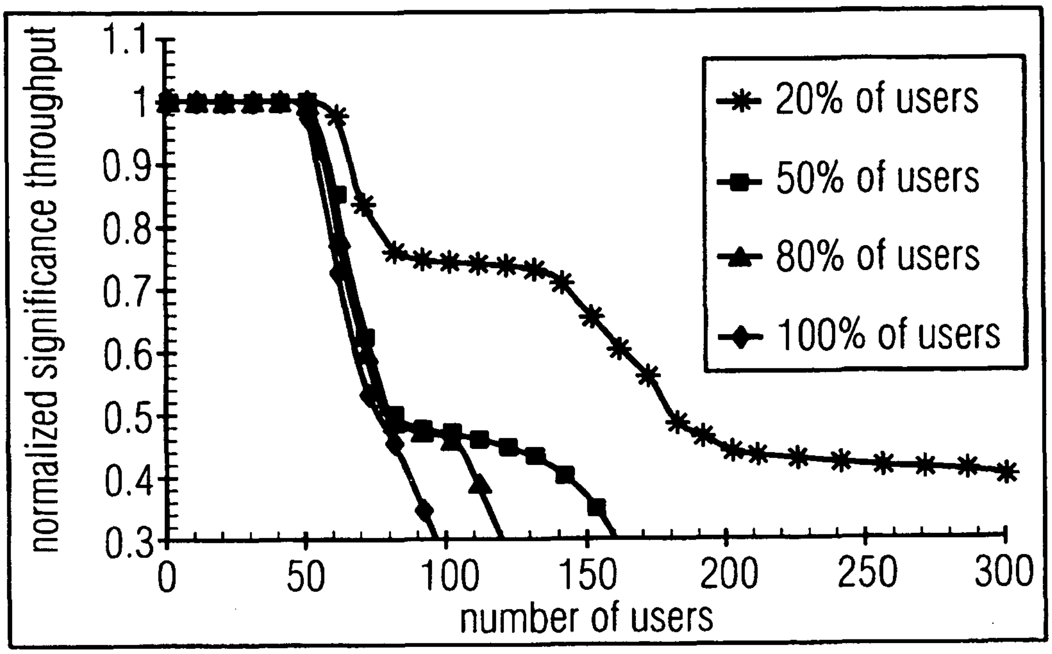
normalized significance throughput
1.1
1
0.9
0.8
0.7
0.6
0.5
0.4
0.3
0
50
100
150
200
250
300
number of users
20% of users
50% of users
80% of users
100% of users

FIG 11

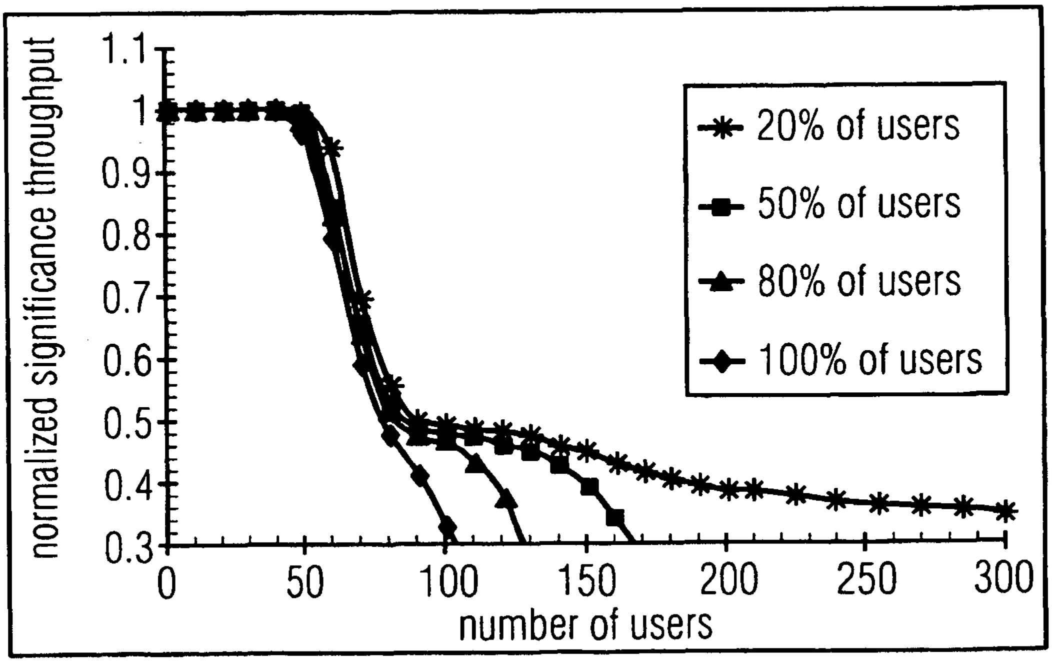
normalized significance throughput
1.1
1
0.9
0.8
0.7
0.6
0.5
0.4
0.3
0
50
100
150
200
250
300
number of users
20% of users
50% of users
80% of users
100% of users

FIG 12

FIG 13

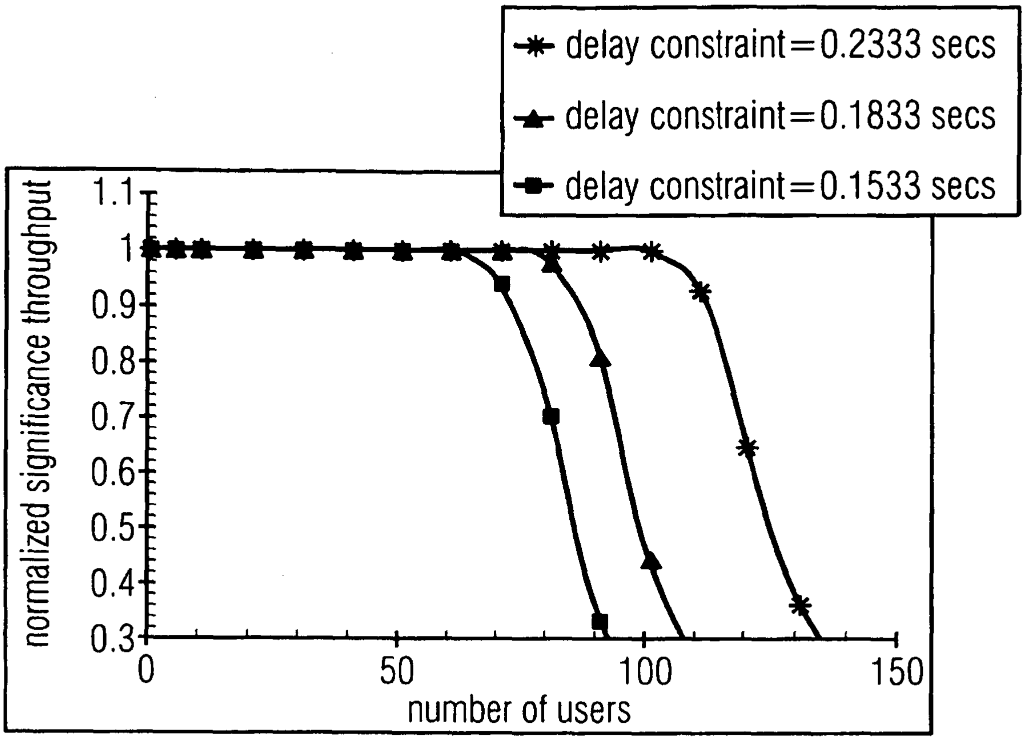
delay constraint=0.2333 secs
delay constraint=0.1833 secs
delay constraint=0.1533 secs
normalized significance throughput
1.1
1
0.9
0.8
0.7
0.6
0.5
0.4
0.3
0
50
100
150
number of users

FIG 14

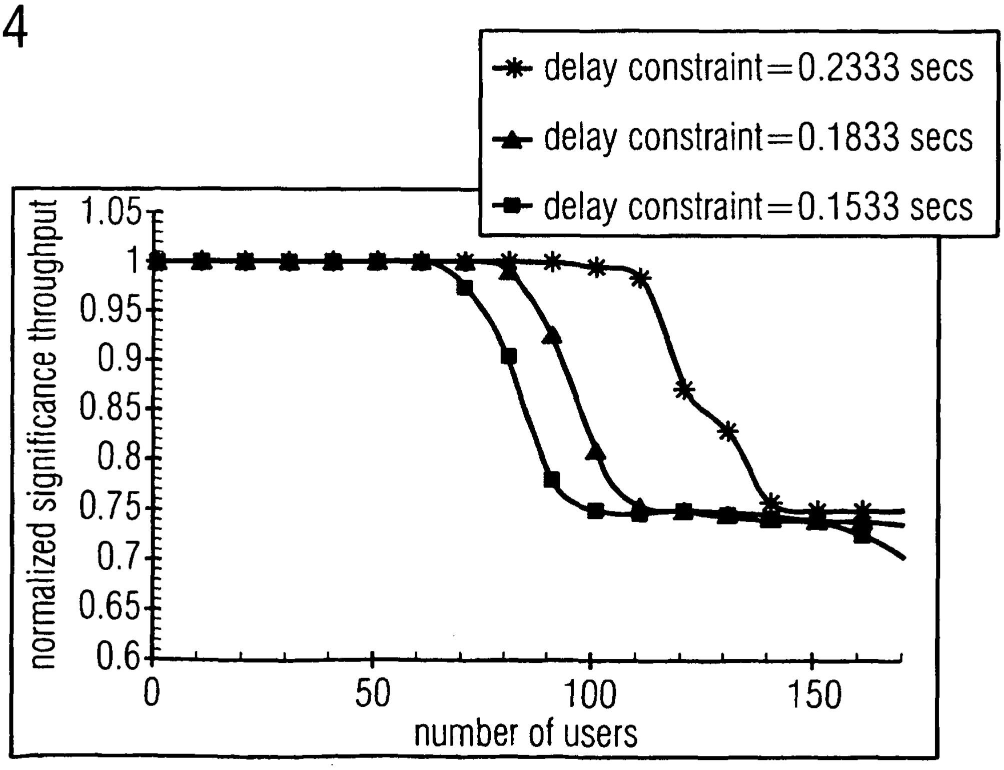
delay constraint=0.2333 secs
delay constraint=0.1833 secs
delay constraint=0.1533 secs
normalized significance throughput
1.05
1
0.95
0.9
0.85
0.8
0.75
0.7
0.65
0.6
0
50
100
150
number of users

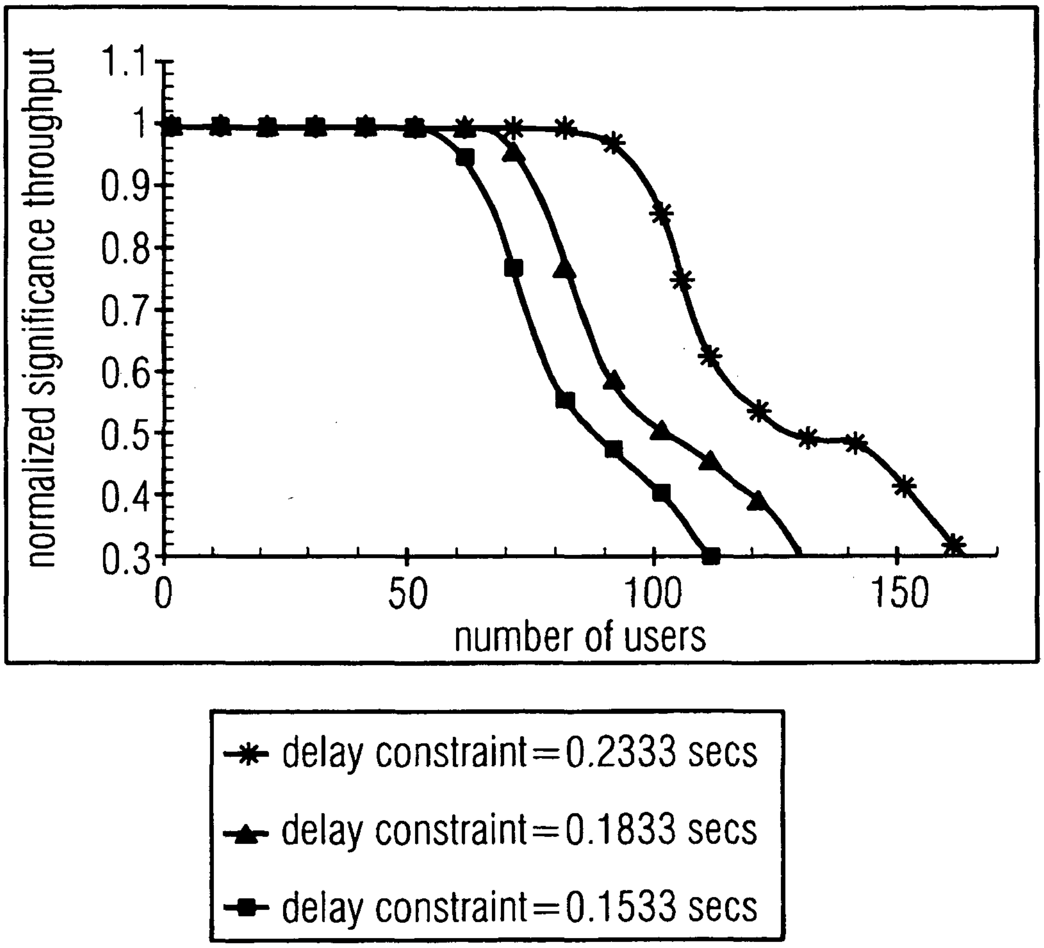
normalized significance throughput
1.1
1
0.9
0.8
0.7
0.6
0.5
0.4
0.3
0
50
100
150
number of users
delay constraint=0.2333 secs
delay constraint=0.1833 secs
delay constraint=0.1533 secs

FIG 15

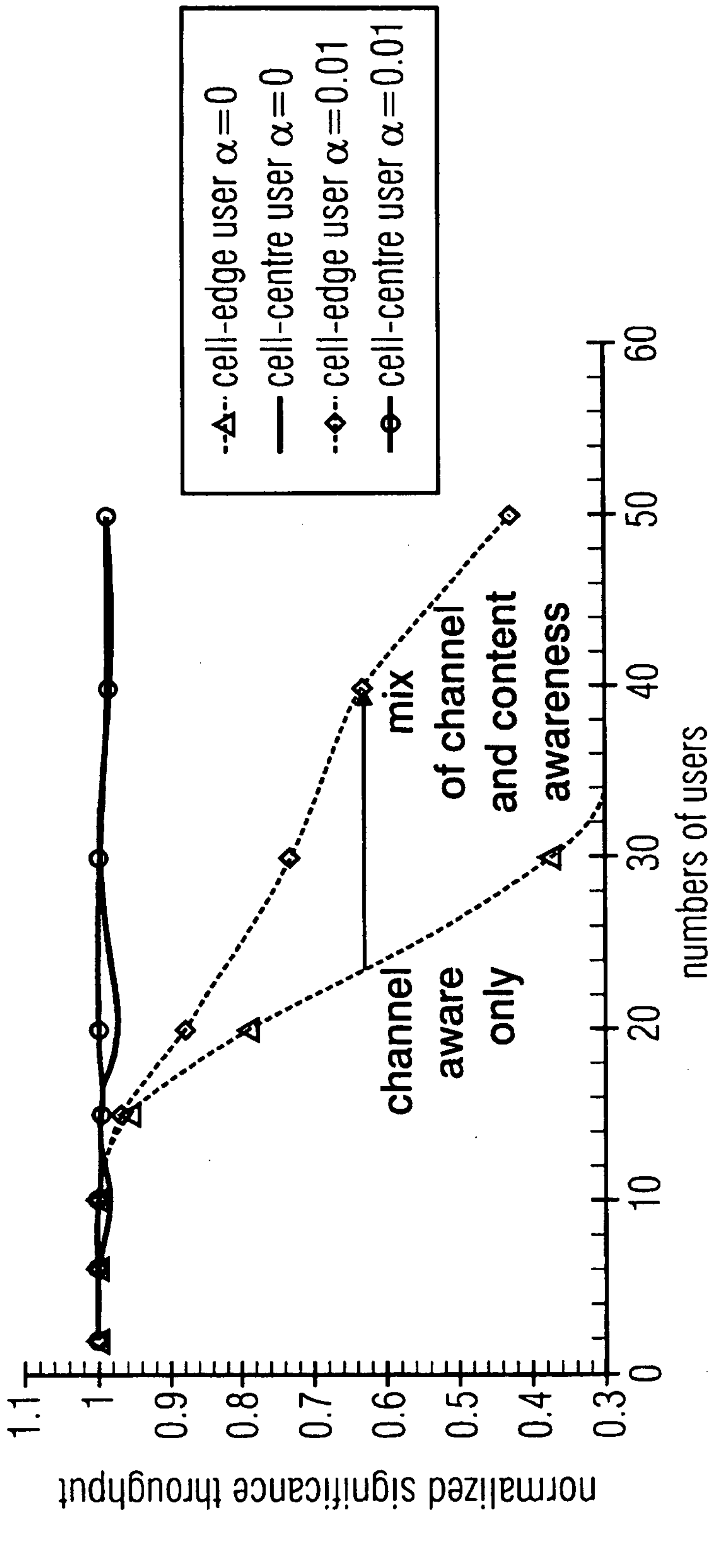
normalized significance throughput
1.1
1
0.9
0.8
0.7
0.6
0.5
0.4
0.3
0
10
20
30
40
50
60
numbers of users
channel aware only
mix of channel and content awareness
cell-edge user α=0
cell-centre user α=0
cell-edge user α=0.01
cell-centre user α=0.01

FIG 16

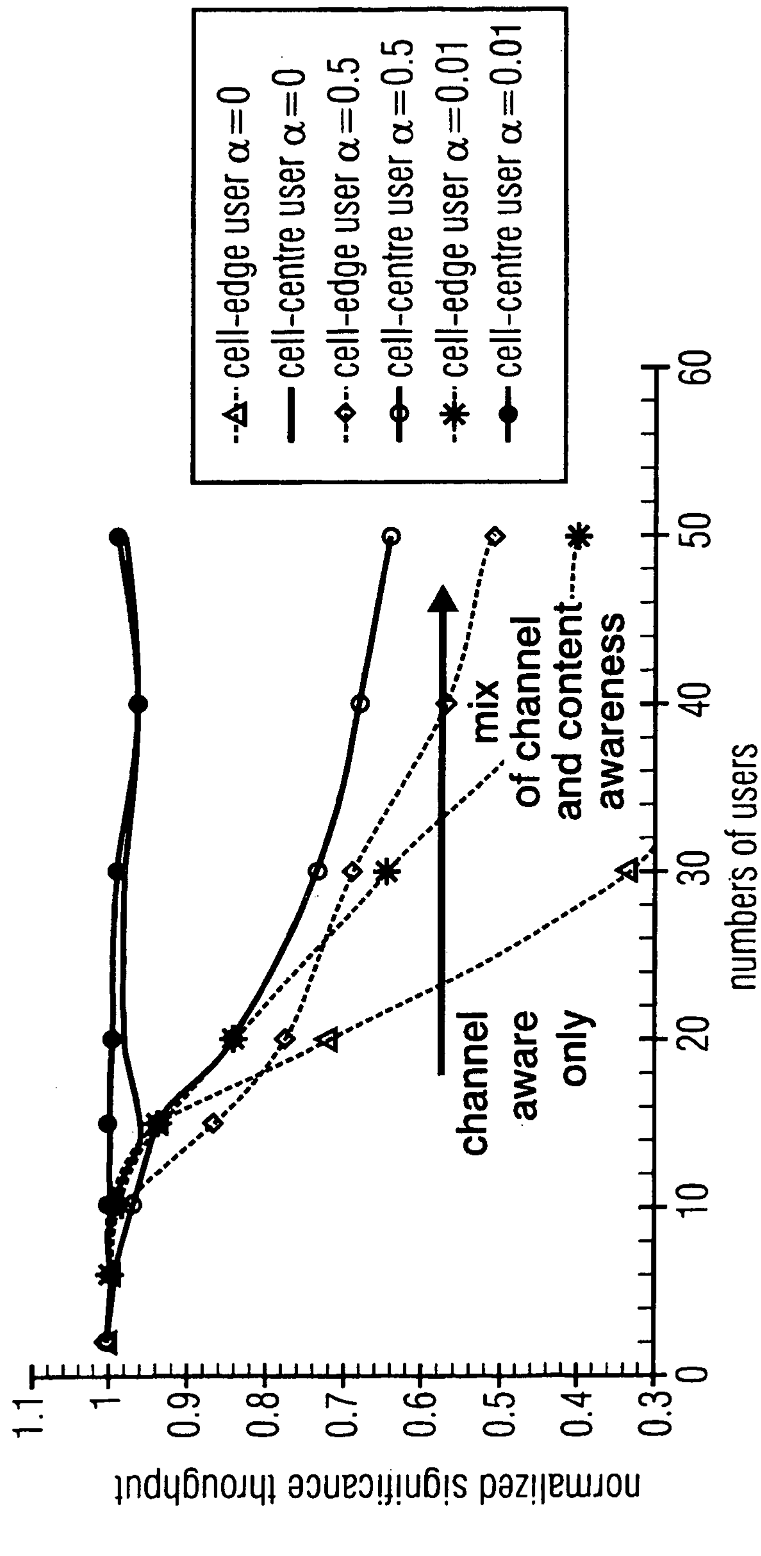
normalized significance throughput
1.1
1
0.9
0.8
0.7
0.6
0.5
0.4
0.3
0
10
20
30
40
50
60
numbers of users
cell-edge user α=0
cell-centre user α=0
cell-edge user α=0.5
cell-centre user α=0.5
cell-edge user α=0.01
cell-centre user α=0.01
channel aware only
mix of channel and content awareness

FIG 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **P. FALCONIO ; P. DINI.** Design and performance evaluation of packet scheduler algorithms for video traffic in the high speed downlink packet access. *Proc. IEEE PIMRC, Barcelona, Spain,* September 2004, 2202-2206
- **D. TSE ; P. VISWANATH.** Fundamentals of Wireless Communication. Cambridge-University-Press, 2005
- **H. WANG ; L. KONDI ; A. LUTHRA ; S. CI.** 4G Wireless Video Communications. John-Wiley-and-Sons, 2009
- **G. LIEBL ; H. JENKAC ; T. STOCKHAMMER ; C. BUCHNER.** Radio link buffer management and scheduling for wireless video streaming. *Telecommunication Systems, Springer Science & Business Media B. V.,* November 2009, vol. 30 (1-3), 255-277
- **M. VAN DER SCHAAR ; Y. ANDREOPOULOS ; Z. HU.** Optimized scalable video streaming over IEEE 802.11a/e HCCA wireless networks under delay constraints. *IEEE Trans. on Mobile Computing,* 2006, vol. 5 (6), 755-768
- **L. CHOI ; W. KELLERER ; E. STEINBACH.** On cross-layer design for streaming video delivery in multiuser wireless environments. *Eurasip Journal on Wireless Communication and Networking,* 2006, vol. 2006, 1-10
- **P. V. PAHALAWATTA ; R. BERRY ; T. N. PAPPAS ; A. K. KATSAGGELOS.** Content-aware resource allocation and packet scheduling for video transmission over wireless networks. *IEEE Journal on Sel. Areas on Commun.,* 2007, vol. 25 (4), 749-759
- **J. HUANG ; Z. LI ; M. CHIANG ; A. K. KATSAGGELOS.** Joint source adaptation and resource allocation for multi-user wireless video streaming. *IEEE Trans. on Circuits and Systems for Video Technology,* 2008, vol. 18 (5), 582-595
- **X. JI ; J. HUANG ; M. CHIANG ; G. LAFRUIT ; F. CATTHOOR.** Scheduling and resource allocation for SVC streaming over OFDM downlink systems. *IEEE Trans. on Circuits and Systems,* 2009, vol. 19 (10), 1549-1555
- **M. FLURRY et al.** *Resource-Aware Fuzzy Logic Control of Video Streaming over IP and Wireless Networks*
- **X. WANG.** *Using Fuzzy Logic Controller to Implement Scalable Quality Adaptation for Stored Video in Diff-Serv Networks*
- **BASRAN C et al.** Bandwidth Consumption Control and Service Differentiation for Video Streaming. *Computer Communications and Networks, 2008. ICCCN '08, proceedings of 17th International Conference on, IEEE,* 03 August 2008, 1-6
- **CHIH-WEI HUANG et al.** Layered Video Resource Allocation in Mobile WiMAX Using Opportunistic Multicasting. *Wireless Communications and Networking Conference, 2009. WCNC 2009. IEEE,* 05 April 2009, 1-6
- Quasi-Optimal Channel Assignment for Real-Time Video in OFDM Wireless Systems. **JUN XU et al.** IEEE Transactions on Wireless Communications. IEEE service center, 01 April 2008, vol. 7, 1417-1427
- **S. SETTI ; V. KUMAR ; N. PRASAD ; N. RAJU.** Implementation of fuzzy priority scheduler for MANET and performance analysis with reactive protocols. *International Journal of Engineering Science and Technology,* January 2010, vol. 2 (8), 3635-3640
- **C. L. CHEN ; J. W. LEE ; S. Y. CHEN ; Y. H. KUO.** Hierarchical cross-layer fuzzy control for compromise of multiple objectives in wireless mobile networks. *Proc. International Conference on Mobile Technology, Applications, and Systems (Mobility 08),* September 2008, vol. 6, 1-7
- **J. M. MENDEL.** Fuzzy logic systems for engineering: A tutorial. *Proceedings of the IEEE,* March 1995, vol. 83 (3), 345-377
- **G. V. DER AUWERA ; P. T. DAVID ; M. REISSLEIN ; L. J. KARAM.** Traffic and quality characterization of the H.264/AVC scalable video extension. *Eurasip Journal on Advances in Multimedia,* 2008, vol. 25 (2
- Physical layer aspects for evolved universal terrestrial radio access (utra) (release 7). *3GPP TR 25.814 V7.1.0,* September 2006
- Eutra physical channels and modulation (release 8). *3GPP TS 36.211 V8.2.0,* March 2008
- **S. VAN KESTER ; T. XIAO ; R. E. KOOIJ ; K. BRUNNSTRM ; O. K. AHMED.** Estimating the impact of single and multiple freezes on video quality. *Proc. SPIE Conf. on Human Vision and Electronic Imaging XVI,* vol. 7865